(19) Europäisches Patentamt / European Patent Office / Office européen des brevets

(11) EP 2 124 557 B1

(12) EUROPEAN PATENT SPECIFICATION

(45) Date of publication and mention of the grant of the patent:
**31.12.2014 Bulletin 2015/01**

(21) Application number: **08707133.8**

(22) Date of filing: **19.01.2008**

(51) Int Cl.:
***A01N 43/16*** *(2006.01)* ***A01N 43/653*** *(2006.01)*
***A01N 37/50*** *(2006.01)* ***A01N 37/46*** *(2006.01)*
***A01P 3/00*** *(2006.01)*

(86) International application number:
**PCT/EP2008/000400**

(87) International publication number:
**WO 2008/092580 (07.08.2008 Gazette 2008/32)**

(54) **SYNERGISTIC FUNGICIDAL COMBINATIONS COMPRISING FORMONONETIN**

SYNERGISTISCHE FUNGIZIDZUSAMMENSETZUNGEN MIT FORMONONETIN

COMBINAISONS DE COMPOSES ACTIFS FUNGICIDES SYNERGIQUES

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **02.02.2007 EP 07002362**

(43) Date of publication of application:
**02.12.2009 Bulletin 2009/49**

(73) Proprietor: **Plant Health Care, Inc.**
**Raleigh NC 27608 (US)**

(72) Inventors:
- **SUTY-HEINZE, Anne**
  **40764 Langenfeld (DE)**
- **MANSFIELD, Darren**
  **51515 Kürten (DE)**
- **GARY, Stéphanie**
  **69410 Champagne au Mont d'Or (FR)**

(74) Representative: **Grünecker, Kinkeldey, Stockmair & Schwanhäusser**
**Leopoldstrasse 4**
**80802 München (DE)**

(56) References cited:
**WO-A-91/07868**
**WO-A-97/28150**
**WO-A-2005/058036**
**WO-A-2005/110088**
**WO-A-2008/086948**
**WO-A-2008/103422**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

The present invention discloses novel active compound combinations comprising firstly formononetin and secondly further known fungicidally active compounds, which novel active compound combinations are highly suitable for controlling unwanted phytopathogenic fungi.

The present invention provides the following embodiments as defined under items 1-10.

1. Active compound combinations having a synergistic fungicidal activity, comprising formononetin of formula (I)

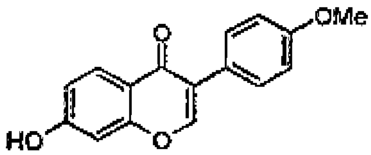

(I)

and at least one active compound selected from metalaxyl, tebuconazole, trifoxystrobin and penflufen.

2. Use of active compound combinations according to item 1 for controlling unwanted phytopathogenic fungi.

3. Use of active compound combinations according to item 1 for treating seed.

4. Use of active compound combinations according to item 1 for treating transgenic plants.

5. Use of active compound combinations according to item 1 for treating seed of transgenic plants.

6. Seed containing formononetin and a fungicide according to item 1, either simultaneously or separately.

7. Method for controlling unwanted phytopathogenic fungi, characterized in that active compound combinations according to item 1 are applied to the unwanted phytopathogenic fungi and/or their habitat and/or seed.
Process for preparing fungicidal compositions, characterized in that active compound combinations according to item 1 are mixed with extenders and/or surfactants.

9. Method according to item 8, characterized in that a seed is incubated or coated with, formononetin and a fungicide selected metalaxyl, tebuconazole, trifoxystrobin and penflufen, at the same time.

10. Method according to item 8, characterized in that a seed is incubated or coated with, formononetin and a fungicide selected from metalaxyl, tebuconazole, trifoxystrobin and penflufen, separately, optionally with at least one further separation layer between active ingredient layers.

Formononetin of formula (I)

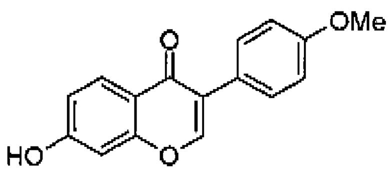

(I)

is an isoflavone, which is produced by red clover (*Trifolium pratens*), and is known to enhance the root growth of agricultural crops (US 5,002,603) by stimulating the growth of rhizobia.

Formononetin is also known to enhance vesicular arbuscular mycorrhizal fungi and has been combined with fungicides such as fludioxonil or clothianidin (see WO2008/103422, WO2008/086948 and WO91/07868).

The preparation of synergistic fungicidal mixtures comprising a fungicide and a 4-chromanone or a iodochromone derivative is also known (see WO2005/110088 and WO2005/058036).

It has now been discovered that formononetin is also a potent enhancer of the activity of fungicides, This enhancing effect is overadditive. This means that the fungicidal activity of the mixtures of formononetin and the fungicides is higher than the sum of the fungicidal activities of the components alone.

Besides Formononetin, also salts of formononetin can be mixed with active compounds, selected from metalaxyl, tebuconazole, trifoxystrobin and penflufen which belong to groups (2), (3), (6) and (8), to give fungicidal mixtures with synergistic activities. Preferable, these arc alkali salts of formononetin.

The present invention describes compositions that at least comprise:

Formononetin and at least one active compound selected from metalaxyl, tebucoriazole, trifoxystrobin and penflufen which belong to groups (2), (3), (6) and (8)below:

Group (2) Strobilurins of the general formula (II)

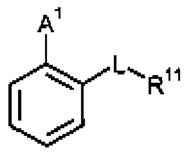

(II)

in which

$A^1$ represents one of the groups

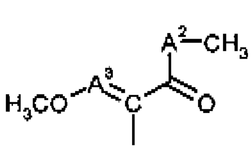
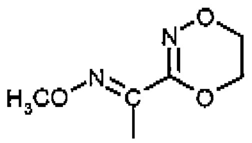
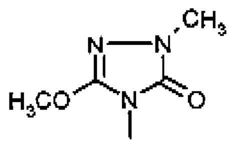
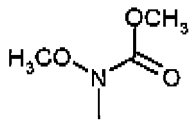
,

$A^2$ represents NH or O,

$A^3$ represents N or CH,

L represents one of the groups

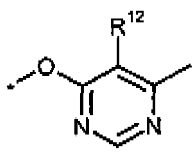
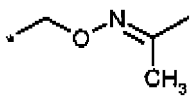
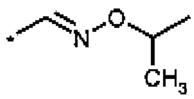
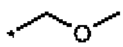
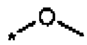
,

where the bond marked with an asterisk (*) is attached to the phenyl ring,

$R^{11}$ represents phenyl, phenoxy or pyridinyl, each of which is optionally mono- or disubstituted by identical or different substituents from the group consisting of chlorine, cyano, methyl and trifluoromethyl, or represents 1-(4-chlorophenyl)-pyrazyl-3-yl or represents 1,2-propane-dione-bis(O-methyloxime)-1-yl,

$R^{12}$ represents hydrogen or fluorine;

Group (3) Triazoles of the general formula (III)

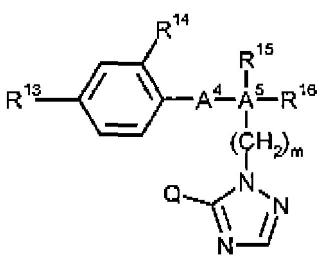

(III)

in which

| | |
|---|---|
| Q | represents hydrogen or SH, |
| m | represents 0 or 1, |
| $R^{13}$ | represents hydrogen, fluorine, chlorine, phenyl or 4-chlorophcnoxy, |
| $R^{14}$ | represents hydrogen or chlorine, |
| $A^4$ | represents a direct bond, $-CH_2-$, $-(CH_2)_2-$ or -O-, |
| $A^4$ | furthermore represents $*-CH_2-CHR$ $^17$ - or $*-CH=CR^{17}-$, where the bond marked with * is attached to the phenyl ring, in which case $R^{15}$ and $R^{17}$ together represent $-CH_2-CH_2-CH[CH(CH_3)_2]-$ or $-CH_2-CH_2-C(CH_3)_2-$, |
| $A^5$ | represents C or Si (silicon), |
| $A^4$ | further represents $-N(R^{17})-$ and $A^5$ furthermore together with $R^{15}$ and $R^{16}$ represents the group $C=N-R^{18}$, in which case $R^{17}$ and $R^{18}$ together represent the group |

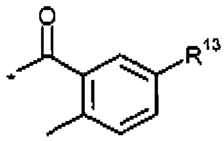,

where the bond marked with * is attached to R

| | |
|---|---|
| $R^{15}$ | represents hydrogen, hydroxyl or cyano, |
| $R^{16}$ | represents 1-cyclopropylethyl, 1-chlorocyclopropyl, $C_1$-$C_4$-alkyl, $C_1$-$C_6$-hydroxyalkyl, $C_1$-$C_4$-alkylcarbonyl, $C_1$-$C_2$-haloalkoxy-$C_1$-$C_2$-alkyl, trimethylsilyl-$C_1$-$C_2$-alkyl, monofluorophenyl or phenyl, |
| $R^{15}$ and $R^{16}$ | furthermore together represent $-O-CH_2-CH(R^{18})-O-$, $-O-CH_2-CH(R^{18})-CH_2-$, or -O-CH-(2-chlorophenyl)-, |
| $R^{18}$ | represents hydrogen, $C_1$-$C_4$-alkyl or bromine; or |

Imibenconazole of the formula

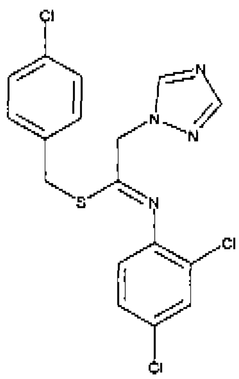

Group (6) Carboxamides of the general formula (V)

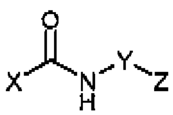 (V)

in which

| | |
|---|---|
| X | represents 2-chloro-3-pyridinyl, represents 1-methylpyrazol-4-yl which is substituted in the 3-position by methyl or trifluoromethyl and in the 5-position by hydrogen or chlorine, represents 4-ethyl-2-ethylamino-1,3-thiazol-5-yl, represents 1-methyl-cyclohexyl, represents 2,2-dichloro-1-ethyl-3-methylcyclopropyl, represents 2-fluoro-2-propyl or represents phenyl which is mono- to trisubstituted by identical or different substituents from the group consisting of chlorine, methyl, and trifluoromethyl, |

X furthermore represents 3,4-dichloroisothiazol-5-yl 5,6-dihydro-2-methyl-l,4-oxathiin-3-yl, 4-methyl-1,2,3-thiadiazol-5-yl, 4,5-dimethyl-2-trimethylsilylthiophen-3-yl, 1-methylpyrrol-3-yl which is substituted in the 4-position by methyl or trifluoromethyl and in the 5-position by hydrogen or chlorine,

Y represents a direct bond, $C_1$-$C_6$-alkanediyl (alkylene) which is optionally substituted by chlorine, cyano or oxo or represents thiophenediyl,

Y furthermore represents $C_2$-$C_6$-alkenediyl (alkenylene),

Z represents hydrogen or the group

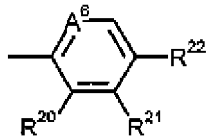

,

Z furthermore represents $C_1$-$C_6$-alkyl,

$A^6$ represents CH or N,

$R^{20}$ represents hydrogen, chlorine, phenyl which is optionally mono- or disubstituted by identical or different substituents from the group consisting of chlorine and di($C_1$-$C_3$-alkyl)aminocarbonyl,

$R^{20}$ furthermore represents cyano or $C_1$-$C_6$-alkyl,

$R^{21}$ represents hydrogen, chlorine, or 1-methylethoxy

$R^{22}$ represents hydrogen, chlorine, hydroxyl, methyl or trifluoromethyl,

$R^{22}$ furthermore represents di($C_1$-$C_3$-alkyl)aminocarbonyl,

$R^{20}$ and $R^{21}$ furthermore together represent *-$CH(CH_3)$-$CH_2$-$C(CH_3)_2$- or *-$CH(CH_3)$-O-$C(CH_3)_2$- where the bond marked with * is attached to $R^{20}$;

<u>Group (6a) Carboxamides of the general formula (Va)</u>

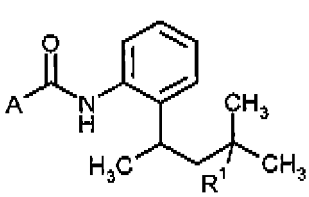

(Va)

in which

$R^1$ represents hydrogen, halogen, $C_1$-$C_3$-alkyl or $C_1$-$C_3$-haloalkyl having 1 to 7 fluorine, chlorine and/or bromine atoms,

A represents one of the radicals A1 to A8 below:

A1

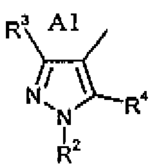

A2

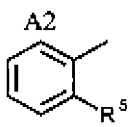

A3

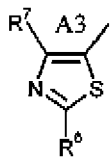

A4

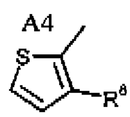

A5 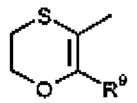 A6 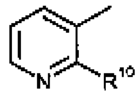 A7 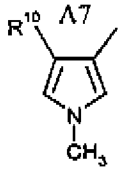 A8 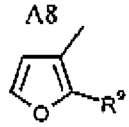

$R^3$ represents $C_1$-$C_3$-alkyl,

$R^3$ represents hydrogen, halogen, $C_1$-$C_3$-alkyl or $C_1$-$C_3$-haloalkyl having 1 to 7 fluorine, chlorine and/or bromine atoms,

$R^4$ represents hydrogen, halogen or $C_1$-$C_3$-alkyl,

$R^5$ represents halogen, $C_1$-$C_3$-alkyl or $C_1$-$C_3$-haloalkyl having 1 to 7 fluorine, chlorine and/or bromine atoms,

$R^6$ represents hydrogen, halogen, $C_1$-$C_3$-alkyl, amino, mono- or di($C_1$-$C_3$-alkyl)amino,

$R^7$ represents hydrogen, halogen, $C_1$-$C_3$-alkyl or $C_1$-$C_3$-haloalkyl having 1 to 7 fluorine, chlorine and/or bromine atoms,

$R^8$ represents halogen, $C_1$-$C_3$-alkyl or $C_1$-$C_3$-haloalkyl having 1 to 7 fluorine, chlorine and/or bromine atoms,

$R^9$ represents halogen, $C_1$-$C_3$-alkyl or $C_1$-$C_3$-haloalkyl having 1 to 7 fluorine, chlorine and/or bromine atoms,

$R^{10}$ represents hydrogen, halogen, $C_1$-$C_3$-alkyl or $C_1$-$C_3$-haloalkyl having 1 to 7 fluorine, chlorine and/or bromine atoms,

Group (6b) Carboxamides

(6b-1) Thifluzamide (CII not covered by genral formula V)

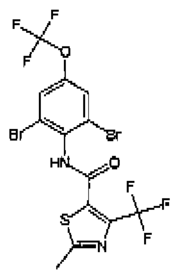

(6b-2) N-(2-[1,1'-bicyclopropyl]-2-ylphenyl)-3-(difluoromethyl)-1-methyl-1H-pyrazole-4-carboxamide

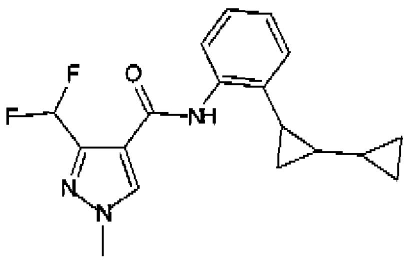

(6b-2)

with preference of the following two stereoisomers

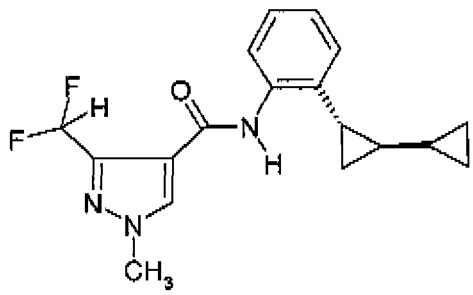

(6b-2a)

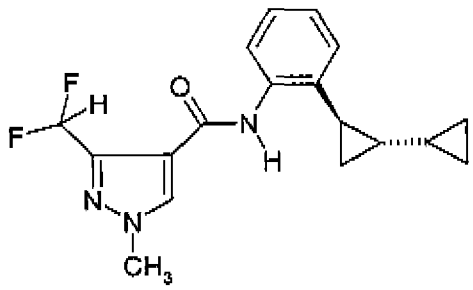

(6b-2b)

<u>Group (8) Acylalanines of the general formula (VI)</u>

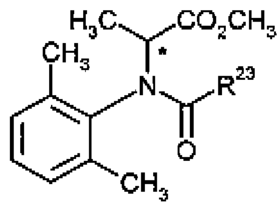

(VI)

in which

- * marks a carbon atom in the R or the S configuration, preferably in the S configuration,
- $R^{13}$ represents benzyl, furyl or methoxymethyl;

The formula (II) embraces the following compounds of group (2):

(2-1) azoxystrobin (known from EP-A 0 382 375) of the formula

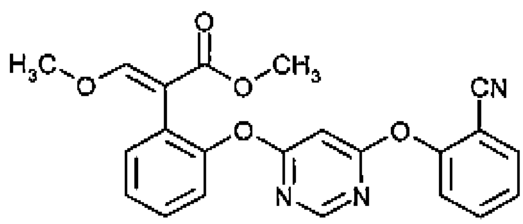

(2-2) fluoxastrobin (known from DE-A 196 02 095) of the formula

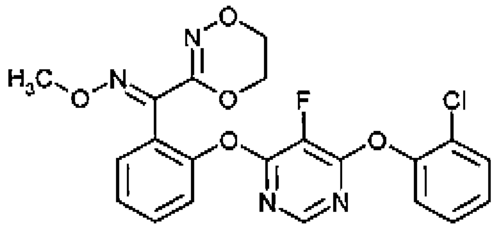

(2-3) (2*E*)-2-(2-{[6-(3-chloro-2-methylphenoxy)-5-fluoro-4-pyrimidinyl]oxy}phenyl)-2-(methoxy-imino)-*N*-methylethanamide (known from DE-A 196 46 407, EP-B 0 712 396) of the formula

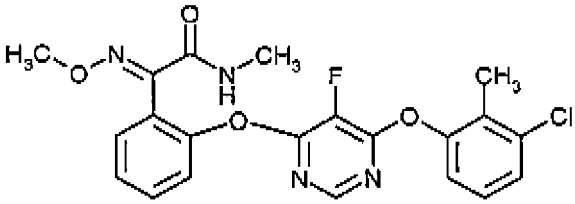

(2-4) trifloxystrobin (known from EP-A 0 460 575) of the formula

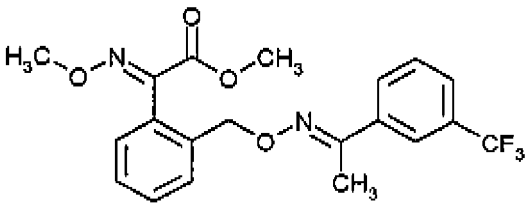

(2-5) (2*E*)-2-(methoxyimino)-*N*-methyl-2-(2-{[({(1*E*)-1-[3-(trifluoromethyl)phenyl]ethyliden}-amino)oxy]methyl}phenyl)ethanamide (known from EP-A 0 569 384) of the formula

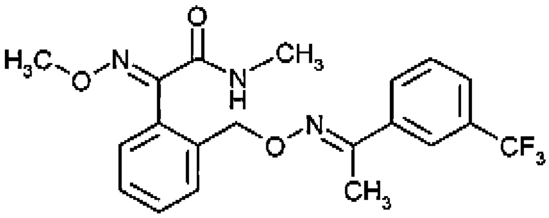

(2-6) (2*E*)-2-(mcthoxyimino)-*N*-methyl-2-{2-[(*E*)-({1-[3-(trifluoromethyl)phenyl)ethoxy}amino) methyl]phenyl}ethanamide (known from EP-A 0 596 254) of the formula

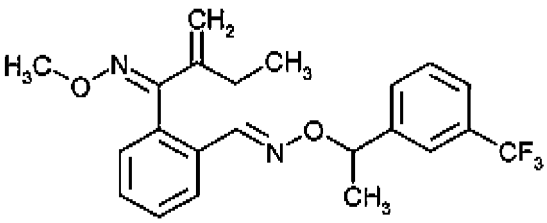

(2-7) orysastrobin (known from DE-A 195 39 324) of the formula

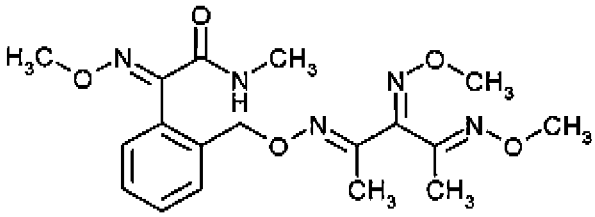

(2-8) 5-methoxy-2-methyl-4-(2-{[({(1*E*)-1-[3-(trifluoromethyl)phenyl]ethyliden}amino)oxy]-methyl}phenyl)-2,4-dihydro-3*H*-1,2,4-triazol-3-one (known from WO 98/23155) of the formula

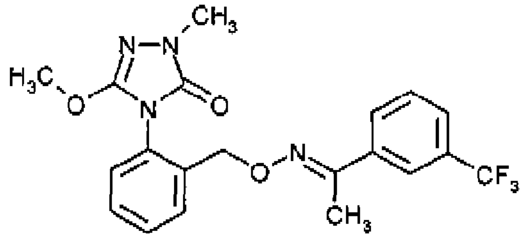

(2-9) kresoxim-methyl (known from EP-A 0 253 213) of the formula

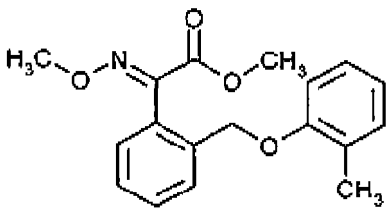

(2-10) dimoxystrobin (known from EP-A 0 398 692) of the formula

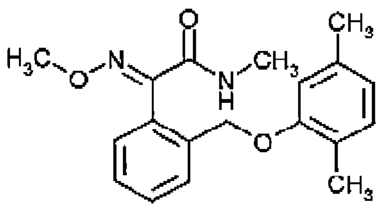

(2-11) picoxystrobin (known from EP-A 0 278 595) of the formula.

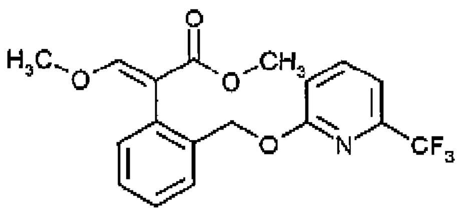

(2-12) pyraclostrobin (known from DE-A 44 23 612) of the formula

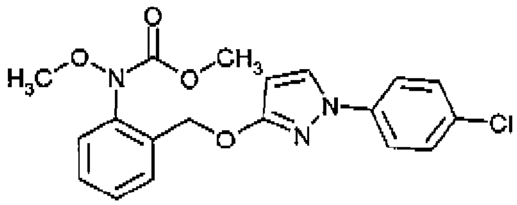

(2-13) metominostrobin (known from EP-A 0 398 692) of the formula

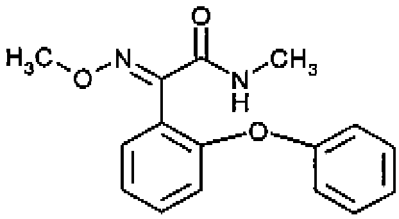

The formula (will) embraces the following compounds of group (3):

(3-I) azaconazole (known from DE-A 25 51 560) of the formula

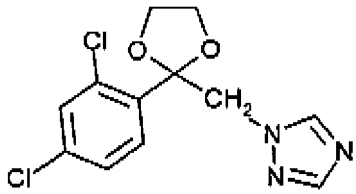

(3-2) etaconazole (known from DE-A 25 51 560) of the formula

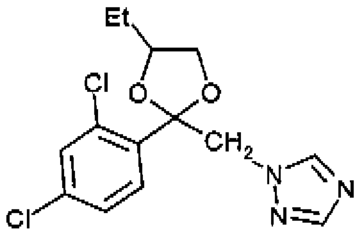

(3-3) propiconazole (known from DE-A 25 51 560) of the formula

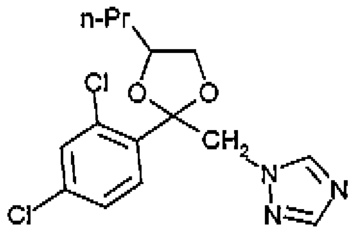

(3-4) difenoconazole (known from EP-A 0 112 284) of the formula

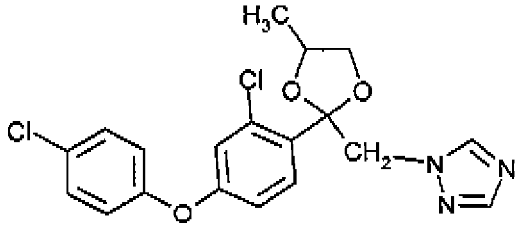

(3-5) bromuconazole (known from EP-A 0 258 161) of the formula

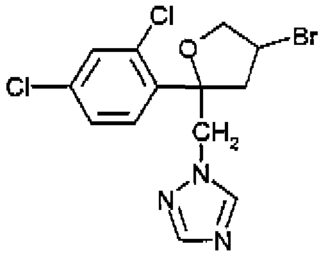

(3-6) cyproconazole (known from DE-A 34 06 993) of the formula

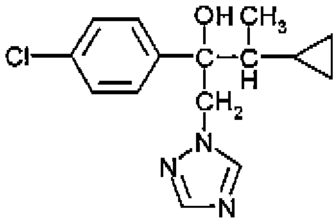

(3-7) hexaconazole (known from DE-A 30 42 303) of the formula

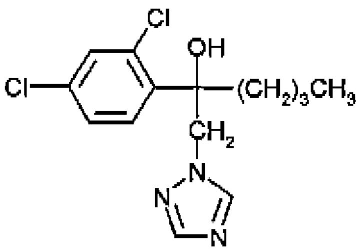

(3-8) penconazole (known from DE-A 27 35 872) of the formula

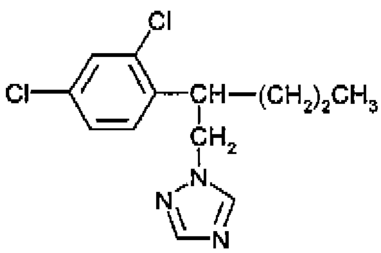

(3-9) myclobutanil (known from EP-A 0 145 294) of the formula

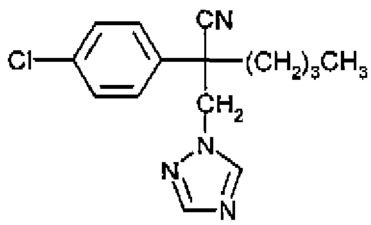

(3-10) tetraconazole (known from EP-A 0 234 242) of the formula

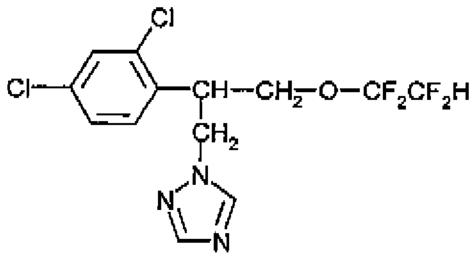

(3-11) flutriafol (known from EP-A 0 015 756) of the formula

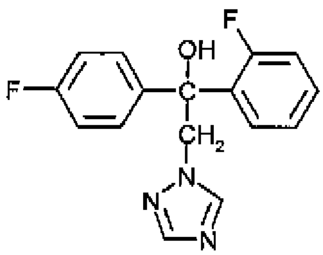

(3-12) epoxiconazole (known from EP-A 0 196 038) of the formula

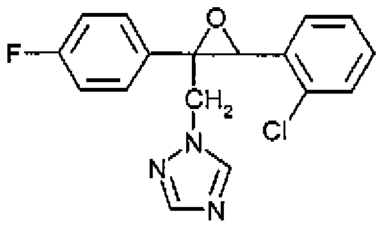

(3-13) flusilazole (known from EP-A 0 068 813) of the formula

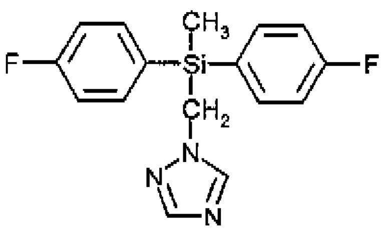

(3-14) simeconazole (known from EP-A 0 537 157) of the formula

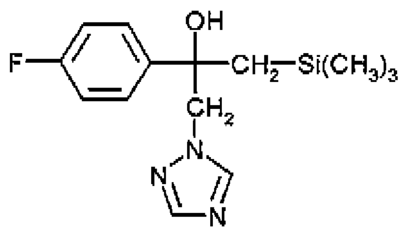

(3-15) prothioconazole (known from WO 96/16048) of the formula

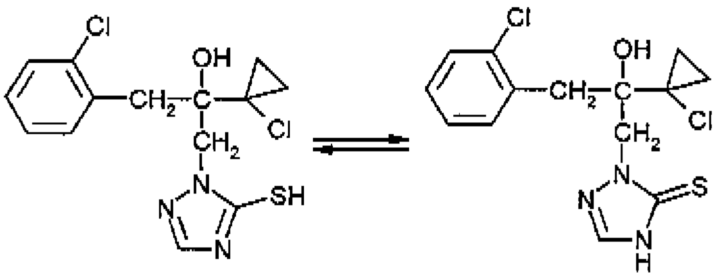

(3-16) fenbuconazole (known from DE-A 37 21 786) of the formula

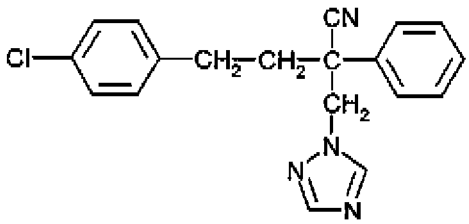

(3-17) tebuconazole (known from EP-A 0 040 345) of the formula

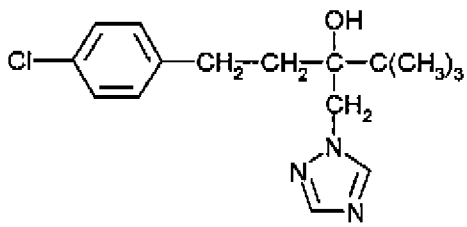

(3-18) ipconazole (known from EP-A 0 329 397) of the formula

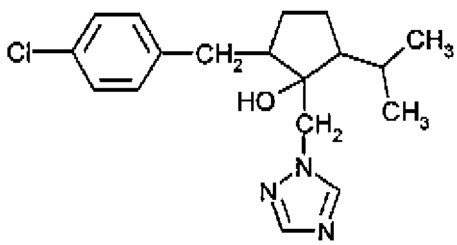

(3-19) metconazole (known from EP-A 0 329 397) of the formula

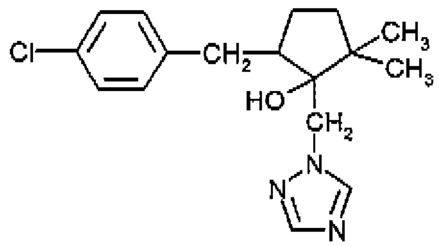

(3-20) triticonazole (known from EP-A 0 378 953) of the formula

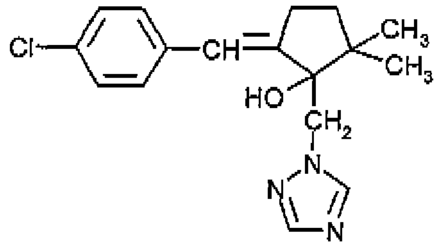

(3-21) bitertanol (known from DE-A 23 24 010) of the formula

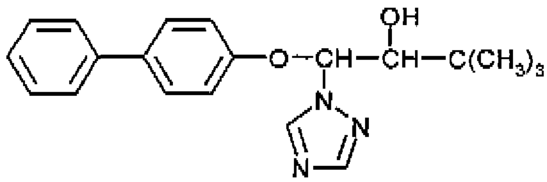

(3-22) triadimenol (known from DE-A 23 24 010) of the formula

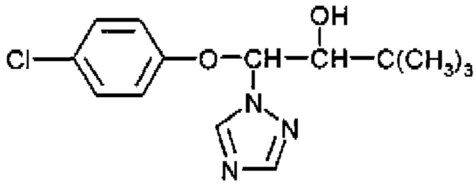

(3-23) triadimefon (known from DE-A 22 01 063) of the formula

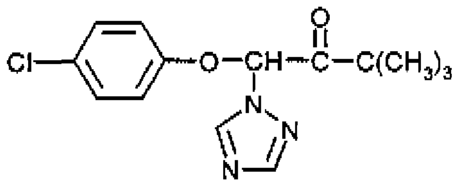

(3-24) fluquinconazole (known from EP-A 0 183 458) of the formula

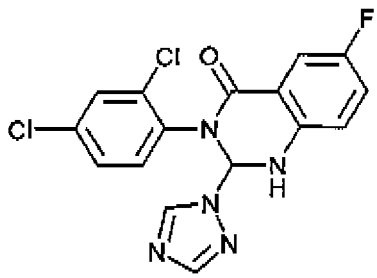

(3-25) quinconazole (known from EP-A 0 183 458) of the formula

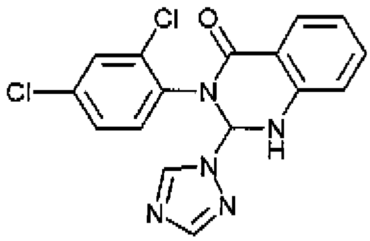

(3-26) Diclobutrazole of the formula

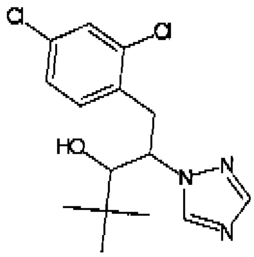

(3-27) Diniconazole of the formula

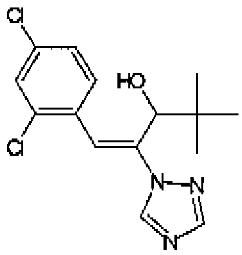

The formula (V) embraces the following compounds of group (6):

(6-1) 2-chloro-N-(1,1,3-trimemylindan-4-yl)nicotinamide (known from EP-A 0 256 503) of the formula

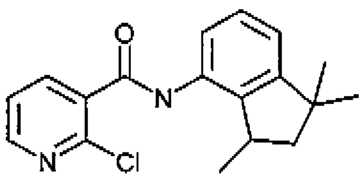

(6-2) boscalid (known from DE-A 195 31 813) of the formula

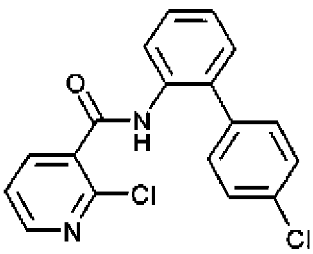

(6-3) furametpyr (known from EP-A 0 315 502) of the formula

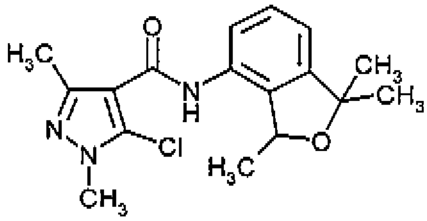

(6-4) N-(3-p-tolylthiophen-2-yl)-1-methyl-3-trifluoromethyl-1H-pyrazole-4-carboxamide (known from EP-A 0 737 682) of the formula

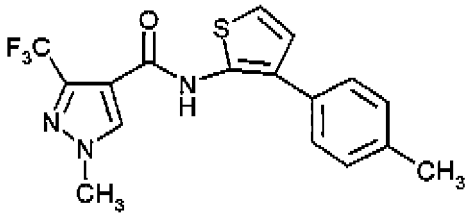

(6-5) ethaboxam (known from EP-A 0 639 574) of the formula

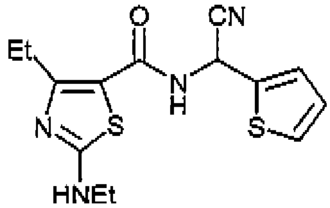

(6-6) fenhexamid (known from EP-A 0 339 418) of the formula

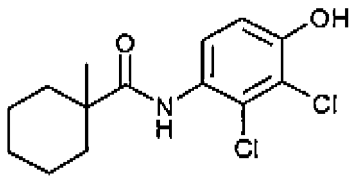

(6-7) carpropamid (known from EP-A 0 341 475) of the formula

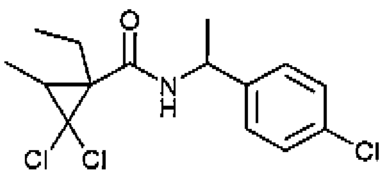

(6-8) 2-chloro-4-(2-fluoro-2-methylpropionylamino)-N,N-dimethylbenzamide (known from EP-A 0 600 629) of the formula

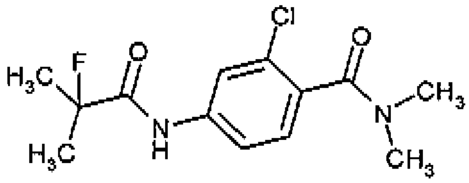

(6-9) picobenzamid (known from WO 99/42447) of the formula

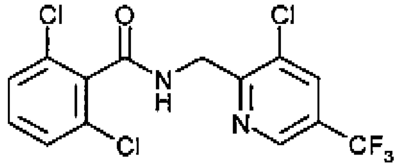

(6-10) zoxamide (known from EP-A 0 604 019) of the formula

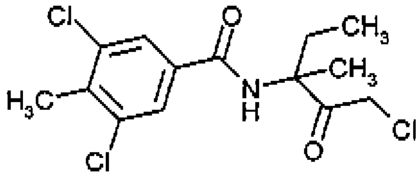

(6-11) 3,4-dichloro-N-(2-cyanophenyl)isothiazole-5-carboxamide (Isothianil) (known from WO 99/24413) of the formula

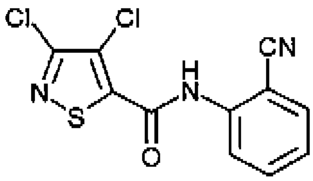

(6-12) carboxin (known from US 3,249,499) of the formula

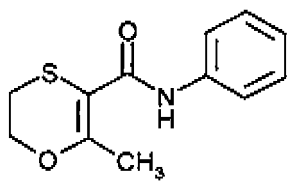

(6-13) tiadinil (known from US 6,616,054) of the formula

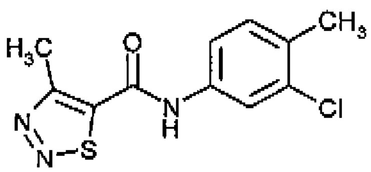

(6-14) penthiopyrad (known from EP-A 0 737 682) of the formula

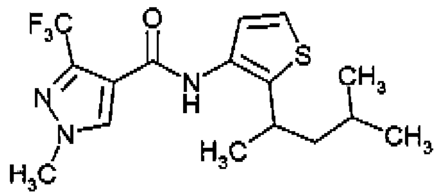

(6-15) silthiofam (known from WO 96/18631) of the formula

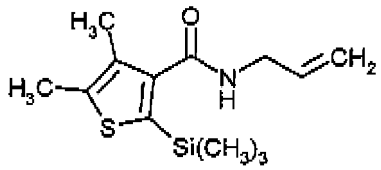

(6-16) *N*-[2-(1,3-dimethylbutyl)phenyl]-1-methyl-4-(trifluoromethyl)-1*H*-pyrrole-3-carboxamide (known from WO 02/38542) of the formula

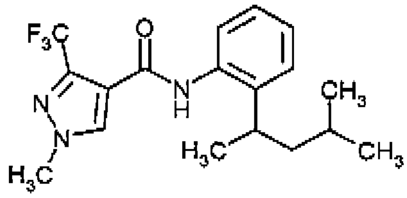

(6-17) N-{2-[3-chloro-5-(trifluoromethyl)pyridin-2-yl]ethyl}-2-(trifluoromethyl)benzamide (known from WO04016088)

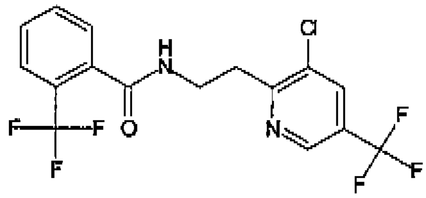

(6-18) flutolanil of the formula

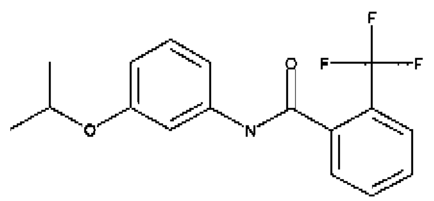

(6b-2) N-(2-[1,1'-bicyclopropyl]-2-ylphenyl)-3-(difluoromethyl)-1-methyl-1H-pyrazole-4-carboxamide

The formula (Va) embraces the following compounds of group (6a):

- $R^1$ represents hydrogen, fluorine, chlorine, methyl, ethyl, n-, isopropyl, monofluoromethyl, difluoromethyl, trifluoromethyl, monochloromethyl, dichloromethyl or trichloromethyl,
- A represents one of the radicals A1 to A5 below:

A1 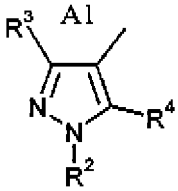 A2 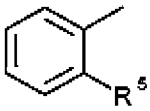 A3 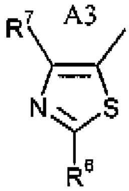 A4 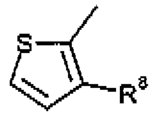 A5 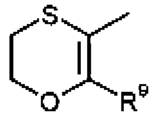

$R^2$ represents methyl, ethyl, n- or isopropyl,

$R^3$ represents iodine, methyl, difluoromethyl or trifluoromethyl,

$R^4$ represents hydrogen, fluorine, chlorine or methyl,

$R^8$ represents chlorine, bromine, iodine, methyl, difluoromethyl or trifluoromethyl,

$R^6$ represents hydrogen, chlorine, methyl, amino or dimethylamino,

$R^7$ represents methyl, difluoromethyl or trifluoromethyl,

$R^x$ represents bromine or methyl,

$R^9$ represent methyl or trifluoromethyl.

Particular preference is given to carboxamides of the formula (Va) in which

$R^1$ represents hydrogen, fluorine, chlorine, methyl, ethyl or trifluoromethyl,
A represents one of the radicals A1 or A2 below:

A1 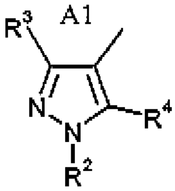 A2 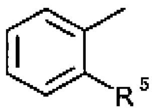

$R^2$ represents methyl or isopropyl,
$R^3$ represents methyl, difluoromethyl or trifluoromethyl,
$R^4$ represents hydrogen or fluorine,
$R^5$ represents iodine, difluoromethyl or trifluoromethyl.

Very particular preference is given to carboxamides of the formula (Va) in which

$R^1$ represents hydrogen or methyl,
A represents one of the radicals A1 or A2 below:

A1 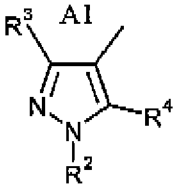 A2 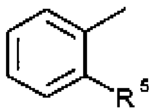

$R^2$ represents methyl,
$R^3$ represents methyl,
$R^4$ represents fluorine,

$R^5$ represents iodine or trifluoromethyl.

Very particular preference is given to using, in mixtures, compounds of the formula (Va)

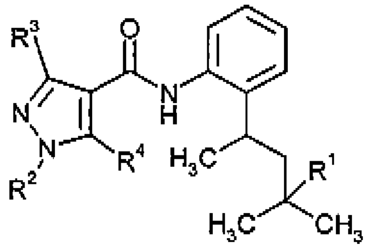

(Va-1)

in which $R^1$, $R^2$, $R^3$ and $R^4$ are as defined above.

Very particular preference is given to using, in mixtures, compounds of the formula (Vb)

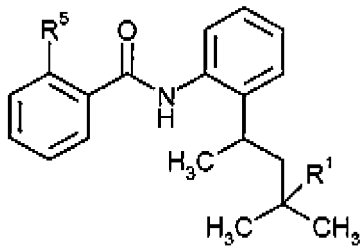

(Va-2)

in which $R^1$ and $R^5$ are as defined above.

The formula (Va) embraces in particular the following mixing partners of group (6a):

(Va1-1) *N*-[2-(1,3-dimethylbutyl)phenyl]-1,3-dimethyl-1*H*-pyrazole-4-carboxamide
(6a-2) *N*-[2-(1,3-dimethylbutyl)phenyl]-5-fluoro-1,3-dimethyl-1*H*-pyrazole-4-carboxamide (known from WO 03/010149)
(6a-3) *N*-[2-(1,3-dimethylbutyl)phenyl]-5-chloro-1,3-dimethyl-1*H*-pyrazole-4-carboxamide (known from JP-A 10-251240)
(6a-4) 3-(difluoromethyl)-*N*-[2-(1,3-dimethylbutyl)phenyl]-1-methyl-1*H*-pyrazole-4-carboxamide
(6a-5) 3-(trifluoromethyl)-*N*-[2-(1,3-dimethylbutyl)phenyl]-5-fluoro-1-methyl-1*H*-pyrazole-4-carboxamide (known from DE-A 103 03 589)
(6a-6) 3-(trifluoromethyl)-*N*-[2-(1,3-dimethylbutyl)phenyl]-5-chloro-1-methyl-1*H*-pyrazole-4-carboxamide (known from JP-A 10-251240)
(6a-7) 1,3-dimethyl-*N*-[2-(1,3,3-trimethylbutyl)phenyl]-1*H*-pyrazole-4-carboxamide (known from JP-A 10-251240)
(6a-8) 5-fluoro-1,3-dimethyl-*N*-[2-(1,3,3-trimethylbutyl)phenyl]-1H-pyrazole-4-carboxamide (known from WO 03/010149)
(6a-9) 3-(difluoromethyl)-1-methyl-*N*-[2-(1,3,3-trimethylbutyl)phenyl]-1*H*-pyrazole-4-carboxamide
(6a-10) 3-(trifluoromethyl)-1-methyl-*N*-[2-(1,3,3-trimethylbutyl)phenyl]-1*H*-pyrazole-4-carboxaxmide
(6a-11) 3-(trifluoromethyl)-5-fluoro-1-methyl-*N*-[2-(1,3,3-trimethylbutyl)phenyl]-1*H*-pyrazole-4-carboxamide (known from DE-A 103 03 589)
(6a-12) 3-(trifluoromethyl)-5-chloro-1-methyl-*N*-[2-(1,3,3-trimethylbutyl)phenyl]-1*H*-pyrazole-4-carboxamide (known from JP-A 10-251240)

The formula (Vb) embraces in particular the following mixing partners of group (6a):

(6a-13) *N*-[2-(1,3-dimethylbutyl)phenyl]-2-iodobenzamide (known from DE-A 102 29 595)
(6a-14) 2-iodo-*N*-[2-(1,3,3-trimethylbutyl)phenyl]benzamide (known from DE-A 102 29 595)
(6a-15) *N*-[2-(1,3-dimethylbutyl)phenyl]-2-(trifluoromethyl)benzamide (known from DE-A 102 29 595)
(6a-16) 2-(trifluoromethyl)-*N*-[2-(1,3,3-trimethylbutyl)phenyl]benzamide (known from DE-A 102 29 595)

The formula (VI) embraces the following mixing partners of group (8):

(8-1) benalaxyl (known from DE-A 29 03 612) of the formula

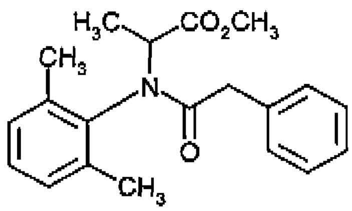

(8-2) furalaxyl (known from DE-A 25 13 732) of the formula

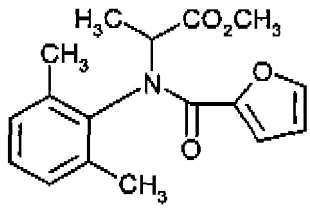

(8-3) metalaxyl (known from DE-A 25 15 091) of the formula

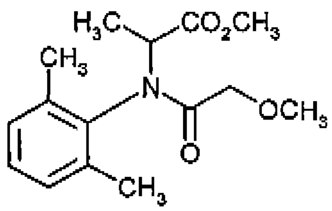

(8-4) metalaxyl-M (known from WO 96/01559) of the formula

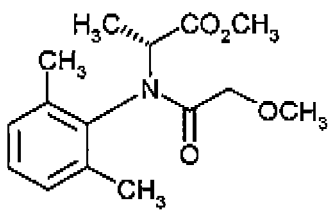

(8-5) benalaxyl-M of the formula

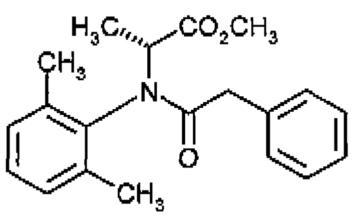

Compound (6-7), carpropamid, has three asymmetrically substituted carbon atoms. Accordingly, compound (6-7) can be present as a mixture of different isomers or else in the form of a single component. Further disclosed herein are the compounds

(1*S*,3*R*)-2,2-dichloro-*N*-[(1*R*)-1-(4-chlorophenyl)ethyl]-1-ethyl-3-methylcyclopropanecarboxamide of the formula

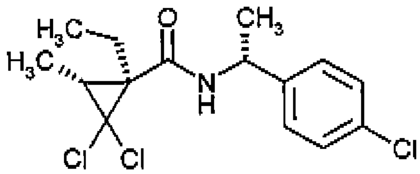

and
(1*R*,3*S*)-2,2-dichloro-*N*-[(1*R*)-1-(4-chlorophenyl)ethyl]-1-ethyl-3-methylcyclopropanecarboxamide of the formula

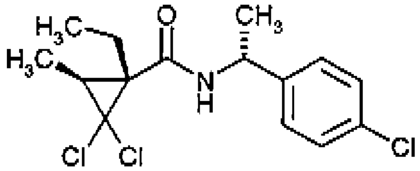

Further disclosed herein arc the following active compounds:

(2-1) azoxystrobin
(2-2) fluoxastrobin
(2-3) (2*E*)-2-(2-{[6-(3-chloro-2-methylphenoxy)-5-fluoro-4-pyrimidinyl]oxy}phenyl)-2-(methoxyimino)-*N*-methylethanamide
(2-4) trifloxystrobin
(2-5) (2*E*)-2-(methoxyimino)-*N*-methyl-2-(2-{[({(1*E*)-1-[3-(trifluoromethyl)-phenyl]ethyliden}amino)oxy]methyl}phenyl)ethanamide
(2-6) (2*E*)2-(methoxyimino)-*N*-methyl-2-{2-[(*E*)-({1-[3-(trifluoromethyl)phenyl]-ethoxy}imino)methyl]phenyl}ethanamide
(2-8) 5-methoxy-2-methyl-4-(2-{[({(1*E*)-1-[3-(trifluoromethyl)phenyl]ethyliden}-amino)oxy]methyl}phenyl)-2,4-dihydro-3*H*-1,2,4-triazol-3-one
(2-11) picoxystrobin
(2-9) kresoxim-methyl
(2-10) dimoxystrobin
(2-12) pyraclostrobin
(2-13) metominostrobin
(3-3) propiconazole
(3-4) difenoconazole
(3-6) cyproconazole
(3-7) hexaconazole
(3-8) penconazole
(3-9) myclobutanil
(3-10) tetraconazole
(3-12) epoxiconazole
(3-13) flusilazole
(3-15) prothioconazole
(3-16) fenbuconazole
(3-17) tebuconazole
(3-19) meteonazole
(3-21) bitertanol
(3-22) triadimenol
(3-23) triadimefon
(3-24) fluquinconazole
(6-2) boscalid
(6-5) ethaboxam
(6-6) fenhexamid
(6-7) carpropamid
(6-8) 2-chloro-4-[(2-fluoro-2-methylpropanoyl)amino]-*N,N*-dimethylbenzamide
(6-9) picobenzamid

(6-10) zoxamide
(6-11) 3,4-dichloro-N-(2-cyanophenyl)isothiazole-5-carboxamide
(6-14) penthiopyrad
(6-16) *N*-[2-(1,3-dimethylbutyl)phenyl]-1-methyl-4-(trifluoromethyl)-1*H*-pyrrole-3-carboxamide
(6-17) N-{2-[3-chloro-5-(trifluoromethyl)pyridin-2-yl]ethyl}-2-(trifluoromethyl)benzamide
(6b-2) N-(2-[1,1'-bicyclopropyl]-2-ylphenyl)-3-(difluoromethyl)-1-methyl-1H-pyrazole-4-carboxamide
(8-1) benalaxyl
(8-2) furalaxyl
(8-3) metalaxyl,
(8-4) metalaxyl-M
(8-5) benalaxyl-M

Further disclosed herein are the following active compounds:

(2-2) fluoxastrobin

(2-4) trifloxystrobin

(2-3) (2*E*)-2-(2-{[6-(3-chloro-2-methylphenoxy)-5-fluoro-4-pyrimidinyl]oxy}phenyl)-2-(methoxyimino)-*N*-methylethanamide

(3-15) prothioconazole

(3-17) tebuconazole

(3-21) bitertanol

(3-22) triadimenol

(3-24) fluquinconazole

(6-6) fenhexamid

(6-9) picobenzamid

(6-7) carpropamid

(6-14) penthiopyrad

(6-17) N-{2-[3-chloro-5-(trifluoromethyl)pyridin-2-y]ethyl}-2-(trifluoromethyl)benzamide

(6b-2) N-(2-[1,1'-bicyclopropyl]-2-ylphenyl)-3-(difluoromethyl)-1-methyl-1H-pyrazole-4-carboxamide

(8-4) metalaxyl-M

(8-5) benalaxyl-M

Further disclosed herein are active compound combinations comprising two groups of active compounds and in each case at least formononetin of the formula (1) and at least one active compound of the given group (2) to (24) are described below. These combinations are the active compound combinations A to U.

In addition to formononetin of the formula (I), the active compound combinations A also comprise a strobilurin of the formula (II) (group 2)

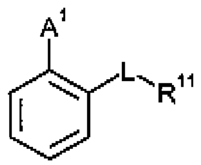 (II)

in which $A^1$, L and $R^{11}$ arc as defined above.

Preferred are active compound combinations A in which the strobilurin of the formula (II) (group 2) is selected from the list below:

(2-1) azoxystrobin

(2-2) fluoxastrobin

(2-3) (2*E*)-2-(2-{[6-(3-chloro-2-methylphenoxy)-5-fluoro-4-pyrimidinyl]oxy}phenyl)-2-(methoxyimino)-*N*-methylethanamide

(2-4) trifloxystrobin

(2-5) (2*E*)-2-(methoxyimino)-*N*-methyl-2-(2-{[({(1*E*)-1-[3-(trifluoromethyl)phenyl]-ethyliden}amino)oxy]methyl}phenyl)ethanamide

(2-6) (2*E*)-2-(methoxyimino)-*N*-methyl-2-{2-[(*E*)-({1-[3-(trifluoromethyl)phenyl]ethoxy}-imino)methyl]phenyl}ethanamide

(2-7) orysastrobin

(2-8) 5-methoxy-2-methyl-4-(2-{[({(1E)-1-[3-(trifluoromethyl)phenyl]ethyliden}-amino)oxy]methyl}phenyl)-2,4-dihydro-3H-1,2,4-triazol-3-one

(2-9) kresoxim-methyl

(2-10) dimoxystrobin

(2-11) picoxystrobin

(2-12) pyraclostrobin

(2-13) metominostrobin

Further disclosed herein arc active compound combinations A in which the strobilurin of the formula (II) (group 2) is selected from the list below:

(2-1) azoxystrobin

(2-2) fluoxastrobin

(2-3) (2*E*)-2-(2-{[6-(3-chloro-2-methylphenoxy)-5-fluoro-4-pyrimidinyl]oxy}phenyl)-2-(methoxyimino)-*N*-methylethanamide

(2-4) trifloxystrobin

(2-12) pyractostrobin

(2-9) kresoxim-methyl

(2-10) dimoxystrobin

(2-11) picoxystrobin

(2-13) metominostrobin

Emphasis is given to the active compound combinations A listed in Table 1 below:

**Table 1: Active compound combinations A**

| No. | Strobilurin | Strobilurin of the formula (II) |
|---|---|---|
| A-1 | formononetin | (2-2) fluoxastrobin |
| A-2 | formononetin | (2-3) (2*E*)-2-(2-{[6-(3-chloro-2-methylphenoxy)-5-fluoro-4-pyrimidinyl]oxy}phenyl)-2-(methoxyimino)-*N*-methylethanamide |
| A-3 | formononetin | (2-4) trifoxystrobin |
| A-4 | formononetin | (2-1) azoxystrobin |
| A-5 | formononetin | (2-12) pyraclostrobin |
| A-6 | formononetin | (2-9) kresoxim-methyl |
| A-7 | formononetin | (2-10) dimoxystrobin |
| A-8 | formononetin | (2-11) picoxystrobin |
| A-9 | formononetin | (2-13) metominostrobin |

In addition to formononetin of the formula (I), the active compound combinations B also comprise a triazole of the formula (III) (group 3)

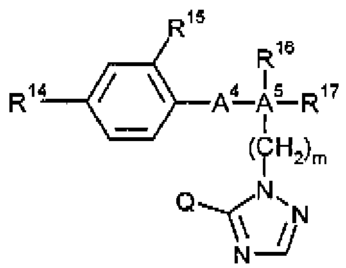

(III)

in which Q, m, $R^{14}$, $R^{15}$, $A^4$, $A^5$, $R^{16}$ and $R^{17}$ are as defined above.

Further disclosed herein are active compound combinations B in which the triazole of the formula (III) (group 3) is selected from the list below:

(3-1) azaconazole
(3-2) etaconazole
(3-3) propiconazole
(3-4) difenoconazole
(3-5) bromuconazole
(3-6) cyproconazole
(3-7) hexaconazole
(3-8) penconazole
(3-9) myclobutanil
(3-10) tetraconazole
(3-11) flutriafol
(3-12) epoxiconazole
(3-13) flusilazole
(3-14) simeconazole
(3-15) prothioconazole
(3-16) fenbuconazole
(3-17) tebuconazole

(3-18) ipconazole
(3-19) metconazole
(3-20) triticonazole
(3-21) bitertanol
(3-22) triadimenol
(3-23) triadimefon
(3-24) fluquinconazole
(3-25) quinconazole

Further disclosed herein are active compound combinations B in which the triazole of the formula (III) (group 3) is selected from the list below:

(3-3) propiconazole

(3-6) cyproconazole

(3-15) prothioconazole

(3-17) tebuconazole

(3-21) bitertanol

(3-4) difenoconazole

(3-7) hexaconazole

(3-19) metconazole

(3-22) triadimenol

(3-24) fluquinconazole

Emphasis is given to the active compound combinations B listed in Table 2 below:

**Table 2: Active compound combination B**

| No. | | Triazole of the formula (III) |
|---|---|---|
| B-1 | formononetin | (3-3) propiconazole |
| B-2 | formononetin | (3-6) cyproconazole |
| B-3 | formononetin | (3-15) prothioconazole |
| B-4 | formononetin | (3-17) tebuconazole |
| B-1 | formononetin | (3-21) bitertanol |
| B-2 | formononetin | (3-4) difenoconazole |
| B-3 | formononetin | (3-7) hexaconazole |
| B-4 | formononetin | (3-19) metconazole |
| B-5 | formononetin | (3-22) triadimenol |
| B-6 | formononetin | (3-24) fluquinconazole |
| B-7 | formononetin | (3-4) difenoconazole |
| B-8 | formononetin | (3-7) hexaconazole |
| B-9 | formononetin | (3-19) meteonazole |
| B-10 | formononetin | (3-22) triadimenol |

In addition to formononetin of the formula (I), the active compound combinations E also comprise a carboxamide of the formula (V) (group 6)

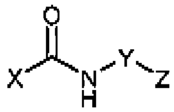

(V)

in which X, Y and Z are as defined above.

Further disclosed herein active compound combinations E in which the carboxamide of the formula (V) (group 6) is selected from the list below:

(6-1) 2-chloro-N-(1,1,3-trimethylindan-4-yl)nicotinamide

(6-2) boscalid

(6-3) furametpyr

(6-4) N-(3-p-tolylthiophen-2-yl)-1-methyl-3-trifluoromethyl-1H-pyrazole-4-carboxamide

(6-5) ethaboxam

(6-6) fenhexamid

(6-7) carpropamid

(6-8) 2-chloro-4-(2-fluoro-2-methylpropionylamino)-N,N-dimethylbenzamide

(6-9) picobenzamid

(6-10) zoxamide

(6-11) 3,4-dichloro-N-(2-cyanophenyl)isothiazole-5-carboxamide

(6-12) carboxin

(6-13) tiadinil

(6-14) penthiopyrad

(6-15) silthiofam

(6-16) *N*-[2-(1,3-dimethylbutyl)phenyl]-1-methyl-4-(trifluoromethyl)-1*H*-pyrrole-3-carboxamide

(6-17) N-{2-[3-chloro-5-(trifluoromethyl)pyridin-2-yl]ethyl}-2-(trifluoromethyl)benzamide

(6b-2) N-(2-[1,1'-bicyclopropyl]-2-ylphenyl)-3-(difluoromethyl)-1-methyl-1H-pyrazole-4-carboxamide

Further disclosed herein are active compound combinations E in which the carboxamide of the formula (V) (group 6) is selected from the list below:

(6-2) boscalid

(6-5) ethaboxam

(6-6) fenhexamid

(6-7) carpropamid

(6-8) 2-chloro-4-(2-fluoro-2-methyl-propionylamino)-N,N-dimethylbenzamide

(6-9) picobenzamid

(6-10) zoxamide

(6-11) 3,4-dichloro-N-(2-cyanophenyl)isothiazole-5-carboxamide

(6-14) penthiopyrad

(6-16) *N*-[2-(1,3-dimethylbutyl)phenyl]-1-methyl-4-(triflluoromethyl)-1*H*-pyrrole-3-carboxamide

Further disclosed herein arc active compound combinations E in which the carboxamide of the formula (V) (group 6) is selected from the list below:

(6-2) boscalid

(6-6) fenhexamid

(6-7) carpropamid

(6-9) picobenzamid

(6-14) penthiopyrad

(6-17) N-{2-[3-chloro-5-(trifluoromethyl)pyridin-2-yl]ethyl}-2-(trifluoromethyl)benzamide

(6b-2) N-(2-[1,1'-bicyclopropyl]-2-ylphenyl)-3-(difluoromethyl)-1-methyl-1H-pyrazole-4-carboxamide

Emphasis is given to the active compound combinations E listed in Table 5 below:

**Table 5: Active compound combination E**

| No. | | Carboxamide of the formula (V) |
|---|---|---|
| E-1 | formononetin | (6-2) boscalid |
| E-2 | formononetin | (6-6) fenhexamid |
| E-3 | formononetin | (6-7) carpropamid |
| E-4 | formononetin | (6-9) picobenzamid |
| E-5 | formononetin | (6-14) penthiopyrad |

In addition to formononetin of the formula (I), the active compound combinations G also comprise an acylalanine of the formula (VI) (group 8)

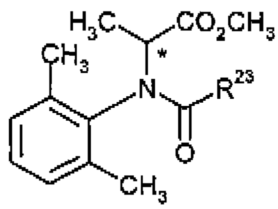

(VI)

in which * and $R^{23}$ are as defined above.

Further disclosed herein are active compound combinations G in which the acylalanine of the formula (VI) (group 8) is selected from the list below:

(8-1) benalaxyl

(8-2) furalaxyl

(8-3) metalaxyl

(8-4) metalaxyl-M

(8-5) benalaxyl-M

Further disclosed herein are active compound combinations G in which the acylalanine of the formula (VI) (group 8) is selected from the list below:

(8-3) metalaxyl

(8-4) metalaxyl-M

(8-5) benalaxyl-M

Emphasis is given to the active compound combinations G listed in Table 7 below:

**Table 7: Active compound combinations G**

| **No.** | | **Acylalanine of the formula (VI)** |
|---|---|---|
| G-1 | formononetin | (8-3) metalaxyl |
| G-2 | formononetin | (8-4) metalaxyl-M |
| G-3 | formononetin | (8-5) benalaxyl-M |

In addition to formononetin of the formula (I), the active compound combinations according to the invention comprise at least one active compound from metalaxyl, tebuconazole, Trifoxystrobin and penflufen which belong to groups (2), (3), (6) and (8). In addition, they may also comprise further fungicidally active additives.
If the active compounds in the active compound combinations according to the invention are present in certain weight ratios, the synergistic effect is particularly pronounced. However, the weight ratios of the active compounds in the active compound combinations can be varied within a relatively wide range. In general, the active compound combinations according to the invention comprise active formononetin and a mixing partner from metalaxyl, tebuconazole, trifoxystrobin and penflufen which belong to groups (2), (3), (6) and (8) in the mixing ratios listed in an exemplary manner in Table 22 below.
The mixing ratios are based on ratios by weight. The ratio is to be understood as active compound formononetin of the formula (I): mixing partner.
Preferred are mixing ratios between 50,000 : 1 to 1 : 50,000
Particularly preferred are ratios between 10,000:1 to 1:10,000
Even more preferred mixing ratios are listed in Table 22.

Table 22: Mixing ratios

| Mixing partner | Very preferred mixing ratio | Most preferred mixing ratio |
|---|---|---|
| Group (2): strobilurins | 50 : 1 to 1 : 50 | 10 : 1 to 1 : 20 |
| Group (3): triazoles except for (3-15) | 50 : 1 to 1 : 50 | 20 : 1 to 1 : 20 |
| (3-15): prothioconazole | 50 : 1 to 1 : 50 | 10 : 1 to 1 : 20 |
| Group (6): carboxamides | 50 : 1 to 1 : 50 | 20 : 1 to 1 : 20 |
| Group (8): acylalanines | 10 : 1 to 1 : 150 | 5 : 1 to 1 : 100 |

In each case, the mixing ratio is to be chosen such that a synergistic mixture is obtained. The mixing ratios between the compound of the formula (I) and a compound of one of metalaxyl, tebuconazole, trifoxystrobin and penflufen

which belong to groups (2), (3), (6) and (8) may also vary between the individual compounds of a group.

The active compound combinations according to the invention have very good fungicidal properties and are suitable for controlling phytopathogenic fungi, such as Plasmodiophoromycetes, Oomycetes, Chytridiomycetes, Zygomycetes, Ascomycetes, Basidiomycetes, Deuteromycetes, etc.

The active compound combinations according to the invention are particularly suitable for controlling Erysiphe graminis, Pyrenophora teres and Leptosphaeria nodorum.

Some pathogens causing fungal diseases which come under the generic names listed above may be mentioned by way of example, but not by way of limitation:

Pythium species, such as, for example, *Pythium ultimum*; Phytophthora species, such as, for example, *Phytophthora infestans;* Pseudoperonospora species, such as, for example, *Pseudoperonospora humuli* or *Pseudoperonospora cubensis;* Plasmopara species, such as, for example, *Plasmopara viticola;* Bremia species, such as, for example, *Bremia lactucae;* Peronospora species, such as, for example, *Peronospora pisi* or *P. brassicae;* Erysiphe species, such as, for example, *Erysiphe graminis;* Sphacrotheca species, such as, for example, *Sphaerotheca fuliginea,* Podosphaera species, such as, for example, *Podosphaera leucotricha;* Venturia species, such as, for example, *Venturia inaequalis;* Pyrenophora species, such as, for example, *Pyrenophora teres* or *P. graminea* (conidia form: Drechslera, syn: Helmintho-sporium); Cochliobolus species, such as, for example, *Cochliobolus sativus* (conidia form: Drechslera, syn: Helminthosporium); Uromyces species, such as, for example, *Uromyces appendiculatus;* Puccinia species, such as, for example, *Puccinia recondita;* Sclerotinia species, such as, for example, *Sclerotinia sclerotiorum;* Tilletia species, such as, for example, *Tilletia caries;* Ustilago species, such as, for example, *Ustilago nuda* or *Ustilago avenue;* Pellicularia species, such as, for example, *Pellicularia sasakii;* Pyricularia species, such as, for example, *Pyricularia oryzae*; Fusarium species, such as, for example, *Fusarium culmorum;* Botrytis species, such as, for example, *Botrylis cinerea;* Septoria species, such as, for example, *Septoria nodorum;* Leptosphaeria species, such as, for example, *Leptosphaeria nodorum;* Cercospora species, such as, for example, *Cercospora canescens;* Alternaria species, such as, for example, *Alternaria brassicae;* Pseudocercosporella species, such as, for example, *Pseudocercosporella herpotrichoides,* Rhizoctonia species, such as, for example, *Rhizoctonia solani.*

The fact that the active compound combinations are well tolerated by plants at the concentrations required for controlling plant diseases permits a treatment of entire plants (above-ground parts of plants and roots), of propagation stock and seed, and of the soil. The active compound combinations according to the invention can be used for foliar application or else as seed dressings.

The fact that the active compounds which can be used are well tolerated by plants at the concentrations required for controlling plant diseases permits a treatment of the seed. Accordingly, the active compounds according to the invention can be used as seed dressings.

A large part of the damage to crop plants which is caused by phytopathogenic fungi occurs as early as when the seed is attacked during storage and after the seed is introduced into the soil, during and immediately after germination of the plants. This phase is particularly critical since the roots and shoots of the growing plant are particularly sensitive and even minor damage can lead to the death of the whole plant. Protecting the seed and the germinating plant by the use of suitable compositions is therefore of particularly great interest.

The control of phytopathogenic fungi which damage plants post-emergence is carried out primarily by treating the soil and the above-ground parts of plants with crop protection agents. Owing to the concerns regarding a possible impact of crop protection agents on the environment and the health of man and animals, there are efforts to reduce the amount of active compounds applied.

The control of phytopathogenic fungi by treating the seeds of plants has been known for a long time and is subject-matter of continuous improvements. However, the treatment of seed frequently entails a series of problems which cannot always be solved in a satisfactory manner. Thus, it is desirable to develop methods for protecting the seed and the germinating plant which dispense with the additional appl ication of crop protection agents after sowing or after the emergence of the plants or where additional applications are at least reduced. It is furthermore desirable to optimize the amount of active compound employed in such a way as to provide maximum protection for the seed and the germinating plant from attack by phytopathogenic fungi, but without damaging the plant itself by the active compound employed. In particular, methods for the treatment of seed should also take into consideration the intrinsic fungicidal properties of transgenic plants in order to achieve optimum protection of the seed and the germinating plant with a minimum of crop protection agents being employed.

The present invention therefore in particular also relates to a method for the protection of seed and germinating plants from attack by phytopathogenic fungi, by treating the seed with a composition according to the invention.

The invention likewise relates to the use of the compositions according to the invention for the treatment of seed for protecting the seed and the germinating plant from phytopathogenic fungi.

Furthermore, the invention relates to seed containing a composition according to the invention so as to afford

protection from phytopathogenic fungi.

One of the advantages of the present invention is that the particular systemic properties of the compositions according to the invention mean that treatment of the seed with these compositions not only protects the seed itself, but also the resulting plants after emergence, from phytopathogenic fungi. In this manner, the immediate treatment of the crop at the time of sowing or shortly thereafter can be dispensed with.

Furthermore, it must be considered as advantageous that the mixtures according to the invention can also be employed in particular in transgenic seed.

The compositions according to the invention are suitable for protecting seed of any plant variety which is employed in agriculture, in the greenhouse, in forests or in horticulture. In particular, this takes the form of seed of cereals (such as wheat, barley, rye, millet and oats), maize, cotton, soya beans, rice, potatoes, sunflowers, beans, coffee, beet (for example sugar beet and fodder beet), peanuts, vegetables (such as tomatoes, cucumbers, onions and lettuce), lawn and ornamental plants. The treatment of seed of cereals (such as wheat, barley, rye and oats), maize and rice is of particular importance.

In the context of the present invention, the composition according to the invention is applied to the seed either alone or in a suitable formulation. Preferably, the seed is treated in a state which is stable enough to avoid damage during treatment. In general, the seed may be treated at any point in time between harvest and sowing. The seed usually used has been separated from the plant and freed from cobs, shells, stalks, coats, hairs or the flesh of the fruits. Thus, for example, it is possible to use seed which has been harvested, cleaned and dried to a moisture content of below 15% by weight. Alternatively, it is also possible to use seed which, after drying, has, for example, been treated with water and then dried again.

When treating the seed, care must generally be taken that the amount of the composition according to the invention applied to the seed and/or the amount of further additives is chosen in such a way that the germination of the seed is not adversely affected, or that the resulting plant is not damaged. This must be borne in mind in particular in the case of active compounds which may have phytotoxic effects at certain application rates.

The compositions according to the invention can be applied directly, that is to say without comprising further components and without having been diluted. In general, it is preferable to apply the composition to the seed in the form of a suitable formulation. Suitable formulations and methods for the treatment of seed are known to the skilled worker and are described, for example, in the following documents: US 4,272,417 A, US 4,245,432 A, US 4,808,430 A, US 5,876,739 A, US 2003/0176428 A1, WO 2002/080675 A1, WO 2002/028186 A2.

The active compound combinations according to the invention are also suitable for increasing the yield of crops. In addition, they show reduced toxicity and are well tolerated by plants.

According to the invention, it is possible to treat all plants and parts of plants. Plants arc to be understood here as meaning all plants and plant populations, such as desired and undesired wild plants or crop plants (including naturally occurring crop plants). Crop plants can be plants which can be obtained by conventional breeding and optimization methods or by biotechnological and genetic engineering methods or combinations of these methods, including the transgenic plants and including plant cultivars which can or cannot be protected by plant breeders' certificates. Parts of plants are to be understood as meaning all above-ground and below-ground parts and organs of plants, such as shoot, leaf, flower and root, examples which may be mentioned being leaves, needles, stems, trunks, flowers, fruit-bodies, fruits and seeds and also roots, tubers and rhizomes. Parts of plants also include harvested material and vegetative and generative propagation material, for example seedlings, tubers, rhizomes, cuttings and seeds.

The treatment of the plants and parts of plants according to the invention with the active compounds is carried out directly or by action on their environment, habitat or storage area according to customary treatment methods, for example by dipping, spraying, evaporating, atomizing, broadcasting, brushing-on and, in the case of propagation material, in particular in the case of seeds, furthermore by one- or multilayer coating.

As already mentioned above, it is possible to treat all plants and their parts according to the invention. In a preferred embodiment, wild plant species and plant cultivars, or those obtained by conventional biological breeding, such as crossing or protoplast fusion, and parts thereof, are treated. In a further preferred embodiment, transgenic plants and plant cultivars obtained by genetic engineering, if appropriate in combination with conventional methods (Genetically Modified Organisms), and parts thereof, are treated. The term "parts" or "parts of plants" or "plant parts" has been explained above.

Particularly preferably, plants of the plant cultivars which are in each case commercially available or in use are treated according to the invention.

Depending on the plant species or plant cultivars, their location and growth conditions (soils, climate, vegetation period, diet), the treatment according to the invention may also result in superadditive ("synergistic") effects. Thus, for example, reduced application rates and/or a widening of the activity spectrum and/or an increase in the activity of the substances and compositions which can be used according to the invention, better plant growth, increased tolerance to high or low temperatures, increased tolerance to drought or to water or soil salt content, increased flowering performance, easier harvesting, accelerated maturation, higher harvest yields, better quality and/or a higher nutritional value of the

harvested products, better storage stability and/or processability of the harvested products are possible which exceed the effects which were actually to be expected.

The transgenic plants or plant cultivars (i.e. those obtained by genetic engineering) which are preferably to be treated according to the invention include all plants which, in the genetic modification, received genetic material which imparted particularly advantageous useful properties ("traits") to these plants. Examples of such properties are better plant growth, increased tolerance to high or low temperatures, increased tolerance to drought or to water or soil salt content, increased flowering performance, easier harvesting, accelerated maturation, higher harvest yields, better quality and/or a higher nutritional value of the harvested products, better storage stability and/or processability of the harvested products. Further and particularly emphasized examples of such properties are a better defence of the plants against animal and microbial pests, such as against insects, mites, phytopathogenic fungi, bacteria and/or viruses, and also increased tolerance of the plants to certain herbicidally active compounds. Examples of transgenic plants which may be mentioned are the important crop plants, such as cereals (wheat, rice), maize, soya beans, potatoes, cotton, oilseed rape and also fruit plants (with the fruits apples, pears, citrus fruits and grapes), and particular emphasis is given to maize, soya beans, potatoes, cotton and oilseed rape. Traits that are emphasized are in particular increased defence of the plants against insects, by toxins formed in the plants, in particular those formed in the plants by the genetic material from Bacillus thuringiensis (for example by the genes CryIA(a), CryI4(b), CryIA(c), CryIIA, CryIIIA, CryIIIB2, Cry9c, Cry2Ab, Cry3Bb and CryIF and also combinations thereof) (hereinbelow referred to as "Bt plants"). Traits that are furthermore particularly emphasized are the increased tolerance of the plants to certain herbicidally active compounds, for example imidazolinones, sulphonylureas, glyphosate or phosphinotricin (for example the "PAT" gene). The genes which impart the desired traits in question can also be present in combination with one another in the transgenic plants. Examples of "Bt plants" which may be mentioned arc maize varieties, cotton varieties, soya bean varieties and potato varieties which are sold under the trade names YIELD GARD® (for example maize, cotton, soya beans), KnockOut® (for example maize), StarLink® (for example maize), Bollgard® (cotton), Nucoton® (cotton) and NewLeaf® (potato). Examples of herbicide-tolerant plants which may be mentioned are maize varieties, cotton varieties and soya bean varieties which are sold under the trade names Roundup Ready® (tolerance to glyphosate, for example maize, cotton, soya bean), Liberty Link® (tolerance to phosphinotricin, for example oilseed rape), IMI® (tolerance to imidazolinones) and STS® (tolerance to sulphonylureas, for example maize). Herbicide-resistant plants (plants bred in a conventional manner for herbicide tolerance) which may be mentioned also include the varieties sold under the name Clearfield® (for example maize). Of course, these statements also apply to plant cultivars which have these genetic traits or genetic traits still to be developed, and which will be developed and/or marketed in the future.

Depending on their particular physical and/or chemical properties, the active compound combinations according to the invention can be converted into the customary formulations, such as solutions, emulsions, suspensions, powders, dusts, foams, pastes, soluble powders, granules, aerosols, suspoemulsion concentrates, natural and synthetic materials impregnated with active compound and microencapsulations in polymeric substances and in coating compositions for seeds, and ULV cool and warm fogging formulations.

These formulations are produced in a known manner, for example by mixing the active compounds or active compound combinations with extenders, that is liquid solvents, liquefied gases under pressure, and/or solid carriers, optionally with the use of surfactants, that is emulsifiers and/or dispersants, and/or foam formers.

If the extender used is water, it is also possible to employ, for example, organic solvents as auxiliary solvents. Essentially, suitable liquid solvents are: aromatics such as xylene, toluene or alkylnaphthalenes, chlorinated aromatics or chlorinated aliphatic hydrocarbons such as chlorobenzenes, chloroethylenes or methylene chloride, aliphatic hydrocarbons such as cyclohexane or paraffins, for example petroleum fractions, mineral and vegetable oils, alcohols such as butanol or glycol and their ethers and esters, ketones such as acetone, methyl ethyl ketone, methyl isobutyl ketone or cyclohexanone, strongly polar solvents such as dimethylformamide or dimethyl sulphoxide, or else water.

Liquefied gaseous extenders or carriers arc to be understood as meaning liquids which are gaseous at standard temperature and under atmospheric pressure, for example aerosol propellants such as butane, propane, nitrogen and carbon dioxide.

Suitable solid carriers are: for example ammonium salts and ground natural minerals such as kaolins, clays, talc, chalk, quartz, attapulgite, montmorillonite or diatomaceous earth, and ground synthetic minerals such as finely divided silica, alumina and silicates. Suitable solid carriers for granules are: for example crushed and fractionated natural rocks such as calcite, pumice, marble, sepiolite and dolomite, or else synthetic granules of inorganic and organic meals, and granules of organic material such as sawdust, coconut shells, maize cobs and tobacco stalks. Suitable emulsifiers and/or foam formers are: for example nonionic and anionic emulsifiers, such as polyoxyethylene fatty acid esters, polyoxyethylene fatty alcohol ethers, for example alkylaryl polyglycol ethers, alkylsulphonates, alkyl sulphates, arylsulphonates, or else protein hydrolysates. Suitable dispersants are: for example lignosulphite waste liquors and methylcellulose.

Tackifiers such as carboxymethylcellulose, natural and synthetic polymers in the form of powders, granules or latices, such as gum arabic, polyvinyl alcohol and polyvinyl acetate, or else natural phospholipids such as cephalins and

lecithins and synthetic phospholipids can be used in the formulations. Other possible additives are mineral and vegetable oils.

It is possible to use colorants such as inorganic pigments, for example iron oxide, titanium oxide and Prussian Blue, and organic dyestuffs such as alizarin dyestuffs, azo dyestuffs and metal phthalocyanine dyestuffs, and trace nutrients such as salts of iron, manganese, boron, copper, cobalt, molybdenum and zinc.

The active compound content of the use forms prepared from the commercial formulations may be varied within wide ranges. The concentration of active compound of the use forms for controlling animal pests, such as insects and acarids, may be from 0.0000001 to 95% by weight of active compound and is preferably from 0.0001 to 1% by weight. Application is in a manner adapted to the use forms.

The formulations for controlling unwanted phytopathogenic fungi generally comprise between 0.1 and 95 per cent by weight of active compound, preferably between 0.5 and 90%.

The active compound combinations according to the invention can be used as such, in the form of their formulations or as the use forms prepared therefrom, such as ready-to-use solutions, emulsifiable concentrates, emulsions, suspensions, wettable powders, soluble powders, dusts and granules. They are used in a customary manner, for example by watering (drenching), drip irrigation, spraying, atomizing, broadcasting, dusting, foaming, spreading-on, and as a powder for dry seed treatment, a solution for seed treatment, a water-soluble powder for seed treatment, a water-soluble powder for slurry treatment, or by encrusting.

The active compound combinations according to the invention can, in commercial formulations and in the use forms prepared from these formulations, be present as a mixture with other active compounds, such as insecticides, attractants, sterilants, bactericides, acaricides, nematicides, fungicides, growth regulators or herbicides.

When using the active compound combinations according to the invention, the application rates can be varied within a relatively wide range, depending on the kind of application. In the treatment of parts of plants, the application rates of active compound combination arc generally between 0.1 and 10 000 g/ha, preferably between 10 and 1000 g/ha. In the treatment of seeds, the application rates of active compound combination are generally between 0.001 and 50 g per kilogram of seed, preferably between 0.01 and 10 g per kilogram of seed. In the treatment of the soil, the application rates of active compound combination are generally between 0.1 and 10 000 g/ha, preferably between 1 and 5000 g/ha.

The active compound combinations can be used as such, in the form of concentrates or in the form of generally customary formulations, such as powders, granules, solutions, suspensions, emulsions or pastes.

The formulations mentioned can be prepared in a manner known per se, for example by mixing the active compounds with at least one solvent or diluent, emulsifier, dispersant and/or binder or fixative, water repellent, if desired desiccants and UV stabilizers, and, if desired, colorants and pigments and other processing auxiliaries.

The inventive method for the protection of seeds and plants, arising from these seeds, against fungal diseases comprises a procedure in which the seed is treated at the same time with formononetin of formula (I) and at least one fungicide selected from metalaxyl, tebuconazole, trifoxystrobin and penflufen which belong to groups (2), (3), (6) and (8). It further comprises a method in which the seed is treated with formononetin of formula (I) and at least one fungicide selected from metalaxyl, tebuconazole, trifoxystrobin and penflufen which belong to groups (2), (3), (6) and (8) separately.

The invention also comprises a seed, which has been treated with formononetin of formula (I) and at least one fungicide selected from metalaxyl, tebuconazole, trifoxystrobin and penflufen which belong to groups (2), (3), (6) and (8)at the same time. The invention also comprises a seed, which has been treated with formononetin of formula (I) and at least one fungicide selected from metalaxyl, tebuconazole, trifoxystrobin and penflufen which belong to groups (2), (3), (6) and (8) separately. For such a seed, the active ingredients, can be applied in separate layers. These layers can optionally be separated by one or more additional layers that may or may not contain active ingredients.

**Insecticides / acaricides / nematicides:**

The inventive compound combinations comprising formononetin and at least one fungicide can also be combined with insecticides as:

*1 Acetylcholinesterase (AChE) inhibitors*

1.1 carbamates (for example alanycarb, aldicarb, aldoxycarb, allyxycarb, aminocarb, azamethiphos, bendiocarb, benfuracarb, bufencarb, butacarb, butocarboxim, butoxycarboxim, carbaryl, carbofuran, carbosulfan, chloethocarb, coumaphos, cyanofenphos, cyanophos, dimetilan, ethiofencarb, fenobucarb, fenothiocarb, formetanate, furathiocarb, isoprocarb, metam-sodium, methiocarb, methomyl, metolcarb, oxamyl, pirimicarb, promecarb, propoxur, thiodicarb, thiofanox, triazamate, trimethacarb, XMC, xylylcarb)

1.2 organophosphates (for example acephate, azamethiphos, azinphos (-methyl, -ethyl), bromophos-ethyl, bromfenvinfos (-methyl), butathiofos, cadusafos, carbophenothion, chlorethoxyfos, chlorfenvinphos, chlormephos, chlorpyrifos (-methyl/-ethyl), coumaphos, cyanofenphos, cyanophos, chlorfenvinphos, demeton-s-methyl, demeton-s-methylsulphon, dialifos, diazinon, dichlofenthion, dichlorvos/DDVP, dicrotophos, dimethoate, dimethylvinphos, dioxabenzofos, disulfoton, EPN, ethion, ethoprophos, etrimfos, famphur, fenamiphos, fenitrothion, fensulfothion, fenthion, flupyrazofos, fonofos, formothion, fosmethilan, fosthiazate, heptenophos, iodofenphos, iprobenfos, isazofos, isofenphos, isopropyl o-salicylate, isoxathion, malathion, mecarbam, methacrifos, methamidophos, methidathion, mevinphos, monocrotophos, nalcd, omethoate, oxydemeton-methyl, parathion (-methyl/-ethyl), phenthoate, phorate, phosalone, phosmet, phosphamidon, phosphocarb, phoxim, pirimiphos (-methyl/-ethyl), profenofos, propaphos, propetamphos, prothiofos, prothoate, pyraclofos, pyridaphenthion, pyridathion, quinalphos, sebufos, sulfotep, sulprofos, tebupirimfos, temephos, terbufos, tetrachlorvinphos, thiometon, triazophos, triclorfon, vamidothion)

*2 Sodium channel modulators/blockers of voltage-gated sodium channels*

2.1 pyrethroids (for example acrinathrin, allethrin (d-cis-trans, d-trans), beta-cyfluthrin, bifenthrin, bioallethrin, bioallethrin-S-cyclopentyl-isomer, bioethanomethrin, biopermethrin, bioresmethrin, chlovaporthrin, cis-cypermethrin, cis-resmethrin, cis-permethrin, clocythrin, cycloprothrin, cyfluthrin, cyhalothrin, cypermethrin (alpha-, beta-, theta-, zeta-), cyphenothrin, DDT, deltamethrin, empenthrin (1R-isomer), esfenvalerate, etofenprox, fenfluthrin, fenpropathrin, fenpyrithrin, fenvalerate, flubrocythrinate, flucythrinate, flufenprox, flumethrin, fluvalinate, fubfenprox, gamma-cyhalothrin, imiprothrin, kadethrin, lambda-cyhalothrin, metofluthrin, permethrin (cis-, trans-), phenothrin (1R-trans isomer), prallethrin, profluthrin, protrifenbute, pyresmethrin, resmethrin, RU 15525, silafluofen, tau-fluvalinate, tefluthrin, terallethrin, tetramethrin (1R-isomer), tralomethrin, transfluthrin, ZXI 8901, pyrethrins (pyrethrum))

2.2 oxadiazines (for example indoxacarb)

*3. Acetylcholine receptor agonists/antagonists*

3.1 chloronicotinyls/neonicotinoids (for example acetamiprid, clothianidin, dinotefuran, imidacloprid, nitenpyram, nithiazine, thiacloprid, thiamethoxam)
3.2 nicotine, bensultap, cartap

*4. Acetylcholine receptor modulators*

4.1 spinosyns (for example spinosad)

*5. Antagonists of GABA-gated chloride channels*

5.1 cyclodiene organochlorines (for example camphechlor, chlordane, endosulfan, gamma-HCH, HCH, heptachlor, lindane, methoxychlor)

5.2 fiproles (for example acetoprole, ethiprole, fipronil, vaniliprole)

*6. Chloride channel activators*

6.1 mectins (for example abamectin, avermectin, emamectin, emamectin-benzoate, ivermectin, milbemectin, milbemycin)

*7. Juvenile hormone mimetics*
(for example diofenolan, epofenonane, fenoxycarb, hydroprene, kinoprene, methoprene, pyriproxifen, triprene)

*8. Ecdyson agonists/disruptors*

8.1 diacylhydrazines (for example chromafenozide, halofenozide, methoxyfenozide, tebufenozide)

*9. Chitin biosynthesis inhibitors*

9.1 benzoylureas (for example bistrifluron, chlofluazuron, diflubenzuron, fluazuron, flucycloxuron, flufenoxuron, hexaflumuron, lufenuron, novaluron, noviflumuron, penfluron, teflubenzuron, triflumuron)

9.2 buprofezin

9.3 cyromazine

*10. Inhibitors of oxidative phosphorylation, ATP disruptors*

10.1 diafenthiuron

10.2 organotins (for example azocyclotin, cyhexatin, fenbutatin-oxide)

*11. Decouplers of oxidative phosphorylation acting by interrupting the H-proton gradient*

11.1 pyrroles (for example chlorfenapyr)

11.2 dinitrophenols (for example binapacryl, dinobuton, dinocap, DNOC)

*12. Site-I electron transport inhibitors*

12.1 MET1s (for example fenazaquin, fenpyroximate, pyrimidifen, pyridaben, tebufenpyrad, tolfenpyrad)

12.2 hydramethylnone

12.3 dicofol

*13. Site-II electron transport inhibitors*

13.1 rotenone

*14. Site-III electron transport inhibitors*

14.1 acequinocyl, fluacrypyrim

*15. Microbial disruptors of the insect gut membrane*

15.1 Bacillus thuringiensis strains

*16. Inhibitors of fat synthesis*

16.1 tetronic acids (for example spirodiclofen, spiromesifen)

16.2 etramic acids [for example 3-(2,5-dimethylphenyl)-8-methoxy-2-oxo-1-azaspiro[4.5]dec-3-en-4-yl ethyl carbonate (alias: carbonic acid, 3-(2,5-dimethylphenyl)-8-methoxy-2-oxo-1-azaspiro[4.5]dec-3-en-4-yl ethyl ester, CAS Reg. No.: 382608-10-8) and carbonic acid, cis-3-(2,5-dimethylphenyl)-8-methoxy-2-oxo-1-azaspiro[4.5]dec-3-en-4-yl ethyl ester (CAS Reg. No.: 203313-25-1)]

*17. arboxamides*
(for example flonicamid)

*18. ctopaminergic agonists*
(for example amitraz)

*19. nhibitors of magnesium-stimulated ATPase*
(for example propargite)

*20. ynaxypyr*

*21. ereistoxin analogue*
(for example thiocyclam hydrogen oxalate, thiosultap-sodium)

*22. iologicals, hormones or pheromones*
(for example azadirachtin, Bacillus spec., Beauveria spec., Codlemone, Metarrhizium spec., Paccilomyces spec., Thuringiensin, Verticillium spec.)

*23. ctive compounds with unknown or unspecific mechanisms of action*

23.1 umigants (for example aluminium phosphide, methyl bromide, sulphuryl fluoride)

23.2 elective antifeedants (for example cryolite, flonicamid, pymetrozine)

23.3 ite growth inhibitors (for example clofentezine, ctoxazole, hexythiazox)

23.4 midoflumet, benclothiaz, benzoximate, bifenazate, bromopropylate, buprofezin, chinomethionat, chlordimeform, chlorobenzilate, chloropicrin, clothiazoben, cycloprene, cyflumetofen, dicyclanil, fenoxacrim, fentrifanil, flubenzimine, flufenerim, flutenzin, gossyplure, hydramethylnone, japonilure, metoxadiazone, petroleum, piperonyl butoxide, potassium oleate, pyrafluprole, pyridalyl, pyriprole, sulfluramid, tetradifon, tetrasul, triarathene, verbutin,

furthermore the compound 3-methylphenyl propylcarbamate (Tsumacide Z), the compound 3-(5-chloro-3-pyridinyl)-8-(2,2,2-trifluoroethyl)-8-azabicyclo[3.2.1]octane-3-carbonitrile (CAS Reg. No. 185982-80-3) and the corresponding 3-endo-isomer (CAS Reg. No. 185984-60-5) (cf. WO 96/37494, WO 98/25923), and preparations which comprise insecticidally active plant extracts, nematodes, fungi or viruses.

A mixture with other known active compounds, such as herbicides, or with fertilizers and growth regulators, safeners and/or semiochemicals is also possible.

The good fungicidal activity of the active compound combinations according to the invention is evident from the example below. While the individual active compounds exhibit weaknesses with regard to the fungicidal activity, the combinations have an activity which exceeds a simple addition of activities.

A synergistic effect of fungicides is always present when the fungicidal activity of the active compound combinations exceeds the total of the activities of the active compounds when applied individually.

The expected activity for a given combination of two active compounds can be calculated as follows (cf. Colby, S.R., "Calculating Synergistic and Antagonistic Responses of Herbicide Combinations", Weeds 15, pages 20-22, 1967):

If

X is the efficacy, when applying the active compound A at a rate of application of active compound of m g/ha,

Y is the efficacy, when applying the active compound B at a rate of application of active compound of n g/ha,

E is the expected efficacy, when applying the active compounds A and B at rates of application of active compound of m and n g/ha,

then

$$E = X + Y - \frac{X \cdot Y}{100}$$

The degree of efficacy, expressed in % is denoted. 0% means an efficacy which corresponds to that of the control while an efficacy of 100% means that no disease is observed.

If the actual fungicidal activity exceeds the calculated value, then the activity of the combination is superadditive, i.e. a synergistic effect exists. In this case, the efficacy which was actually observed must be greater than the value for the expected efficacy (E) calculated from the abovementioned formula.

The invention is illustrated by the following examples

**Example A**

***Pyricularia oryzae* -Test (in vitro) / Microtest**

The microtest was performed in liquid medium with potato-dextrose broth (PDB) using microtitre plates.

The active compound is applied as the technical active substance dissolved in methanol.

A spore suspension of *Pyricularia oryzae* was used for inoculation. After 4 days of incubation by darkness under shaking (10 Hrz), the optical density in each cavity was evaluated with the aid of a microtitre plate reader.

0% means an efficacy which corresponds to that of the control, while an efficacy of 100% means that no fungal growth is observed.

The table below clearly shows that the observed activity of the active compound combination according to the invention is greater than the calculated activity, i.e. a synergistic effect is present.

**TABLE**

| ***Pyricularia oryzae* -Test (in vitro) / Microtest** | | |
|---|---|---|
| Active compound<br>Known: | Rate of application of active compound in ppm | Efficacy in % |
| Trifloxystrobin | 0.3 | 56 |
| Formononetin | 0.3 | 11 |

| **Inventive Compound combination:** | | | | |
|---|---|---|---|---|
| Ratio | Ratio of the mixture | Rate of application of active compound in ppm | Actual of Efficacy (%) | Expected value, calculated using Colby's formula |
| Trifloxystrobin + Formononetin | **1:1** | 0.3 + 0.3 | **99** | **61** |

**Example B**

***Ustilago avenae* -Test (in vitro) / Microtest**

The microtest was performed in liquid medium with potato-dextrose broth (PDB) using microtitre plates.

The active compound is applied as the technical active substance dissolved in methanol.

A spore suspension of *Ustilago avenue* was used for inoculation. After 4 days of incubation by darkness under shaking (10 Hrz), the optical density in each cavity was evaluated with the aid of a microtitre plate reader.

0% means an efficacy which corresponds to that of the control, while an efficacy of 100% means that no fungal growth is observed.

The table below clearly shows that the observed activity of the active compound combination according to the invention is greater than the calculated activity, i.e. a synergistic effect is present.

**TABLE**

| ***Ustilago avenae* -Test (in vitro) / Microtest** | | |
|---|---|---|
| Active compound<br>Known: | Rate of application of active compound in ppm | Efficacy in % |
| BYF 14182 | 0.01 | 95 |
| Formononetin | 0.01 | 13 |

| Inventive Compound combination: | | | | |
|---|---|---|---|---|
| | Ratio of the mixture | Rate of application of active compound in ppm | Actual of Efficacy (%) | Expected value, calculated using Colby's formula |
| BYF + Formononetin | 14182 } | **1:1** 0.0 + 0.01 } | **98** | **95** |

Example C

***Phylophihora cryptogea* -Test (in vitro) / Microtest**

The microtest was performed in liquid medium with potato-dextrose broth (PDB) using microtitre plates.

The active compound is applied as the technical active substance dissolved in methanol.

A mycelium suspension of *Phytophthora cryptogea* was used for inoculation. After 3 days of incubation by darkness under shaking (10 Hrz), the optical (density in each cavity was evaluated with the aid of a microtitre plate reader.

0% means an efficacy which corresponds to that of the control, while an efficacy of 100% means that no fungal growth is observed.

The table below clearly shows that the observed activity of the active compound combination according to the invention is greater than the calculated activity, i.e. a synergistic effect is present.

**TABLE**

| ***Phytophthora crytogea* -Test (in vitro) / Microtest** | | |
|---|---|---|
| Active compound Known: | Rate of application of active compound in ppm | Efficacy in % |
| Metalaxyl | 0.3 | 48 |
| Formononctin | 0.3 | 14 |

| Inventive Compound combination: | | | | |
|---|---|---|---|---|
| | Ratio of the mixture | Rate of application of active compound in ppm | Actual of Efficacy (%) | Expected value, calculated using Colby's formula |
| Metalaxyl + Formononetin | **1:1** } | 0.3 + 0.3 } | **61** | **55** |

**Example D**

***Ustilago avenae* -Test (in vitro) / Microtest**

The microtest was performed in liquid medium with potato-dextrose broth (PDB) using microtitre plates.

The active compound is applied as the technical active substance dissolved in methanol.

A spore suspension of *Ustilago avenae* was used for inoculation. After 4 days of incubation by darkness under shaking (10 Hrz), the optical density in each cavity was evaluated with the aid of a microtitre plate reader.

0% means an efficacy which corresponds to that of the control, while an efficacy of 100% means that no fungal growth is observed.

The table below clearly shows that the observed activity of the active compound combination according to the invention is greater than the calculated activity, i.e. a synergistic effect is present.

**TABLE**

| ***Ustilago avenae*** **-Test fin vitro) / Microtest** | | |
|---|---|---|
| Active compound Known: | Rate of application of active compound in ppm | Efficacy in% |
| Tebuconazole | 0.1 | 96 |
| Formononetin | 0.1 | 17 |

| **Inventive Compound combination:** | | | | |
|---|---|---|---|---|
| | Ratio of the mixture | Rate of application of active compound in ppm | Actual of Efficacy (%) | Expected value, calculated using Colby's formula |
| | **1:1** | | **100** | **97** |
| | | 0.1 + 0.1 | | |
| Tebuconazole + Formononetin | } | | } | |

**Claims**

1. Active compound combinations having a synergistic fungicidal activity, comprising formononetin of formula (I)

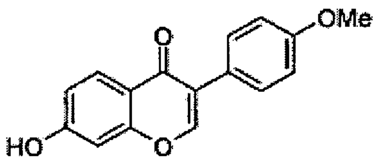

(I)

and at least one active compound selected from metalaxyl, tebuconazole, trifoxystrobin and penflufen.

2. Use of active compound combinations according to Claim 1 for controlling unwanted phytopathogenic fungi.

3. Use of active compound combinations according to Claim 1 for treating seed.

4. Use of active compound combinations according to Claim 1 for treating transgenic plants.

5. Use of active compound combinations according to Claim 1 for treating seed of transgenic plants.

6. Seed containing formononetin and a fungicide according to Claim 1, either simultaneously or separately.

7. Method for controlling unwanted phytopathogenic fungi, **characterized in that** active compound combinations according to Claim 1 are applied to the unwanted phytopathogenic fungi and/or their habitat and/or seed.

8. Process for preparing fungicidal compositions, **characterized in that** active compound combinations according to Claim 1 are mixed with extenders and/or surfactants.

9. Method according to claim 8, **characterized in that** a seed is incubated or coated with, formononetin and a fungicide selected metalaxyl, tebuconazole, trifoxystrobin and penflufen, at the same time.

10. Method according to claim 8, **characterized in that** a seed is incubated or coated with, formononetin and a fungicide selected from metalaxyl, tebuconazole, trifoxystrobin and penflufen, separately, optionally with at least one further separation layer between active ingredient layers.

## Patentansprüche

1. Wirkstoffkombinationen mit synergistischer fungizider Aktivität, umfassend Formononetin der Formel (I)

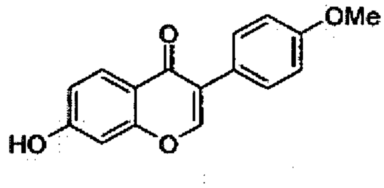

(I)

und mindestens einen Wirkstoff ausgewählt aus Metalaxyl, Tebuconazol, Trifoxystrobin und Penflufen.

2. Verwendung der Wirkstoffkombinationen nach Anspruch 1 zur Kontrolle unerwünschter phytopathogener Pilze.

3. Verwendung der Wirkstoffkombinationen nach Anspruch 1 zur Behandlung von Saatgut.

4. Verwendung der Wirkstoffkombinationen nach Anspruch 1 zur Behandlung von transgenen Pflanzen.

5. Verwendung der Wirkstoffkombinationen nach Anspruch 1 zur Behandlung von Saatgut von transgenen Pflanzen.

6. Saatgut enthaltend Formononetin und ein Fungizid nach Anspruch 1, entweder gleichzeitig oder getrennt.

7. Verfahren zur Kontrolle unerwünschter phytopathogener Pilze, **dadurch gekennzeichnet, dass** die Wirkstoffkombinationen nach Anspruch 1 aufgebracht werden auf die unerwünschten phytopathogenen Pilze und/oder deren Lebensraum und/oder Saatgut.

8. Verfahren zur Herstellung der fungiziden Zusammensetzungen, **dadurch gekennzeichnet, dass** die Wirkstoffkombinationen nach Anspruch 1 mit Streckmitteln und/oder oberflächenaktiven Mitteln gemischt werden.

9. Verfahren nach Anspruch 8, **dadurch gekennzeichnet, dass** ein Saatgut mit Formononetin und einem Fungizid ausgewählt aus Metalaxyl, Tebuconazol, Trifoxystrobin und Penflufen gleichzeitig inkubiert oder damit beschichtet wird.

10. Verfahren nach Anspruch 8, **dadurch gekennzeichnet, dass** ein Saatgut mit Formononetin und einem Fungizid ausgewählt aus Metalaxyl, Tebuconazol, Trifoxystrobin und Penflufen getrennt, gegebenenfalls mit mindestens einer weiteren Trennschicht zwischen den Schichten der aktiven Bestandteile, inkubiert oder damit beschichtet wird.

## Revendications

1. Combinaisons d'un composé actif présentant une activité fongicide synergique, comprenant de la formononétine selon la formule (I)

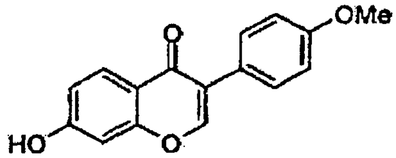

(I)

et au moins un composé actif sélectionné parmi le métalaxyl, le tébuconazole, la trifoxystrobine et le penflufène.

2. Utilisation de combinaisons d'un composé actif selon la revendication 1 pour contrôler des champignons phytopathogènes indésirables.

3. Utilisation de combinaisons d'un composé actif selon la revendication 1 pour traiter des semences.

4. Utilisation de combinaisons d'un composé actif selon la revendication 1 pour traiter des plantes transgéniques.

5. Utilisation de combinaisons d'un composé actif selon la revendication 1 pour traiter des semences de plantes transgéniques.

6. Semences contenant de la formononétine et un fongicide selon la revendication 1, soit simultanément, soit séparément.

7. Procédé pour contrôler des champignons phytopathogènes indésirables, **caractérisé en ce que** des combinaisons d'un composé actif selon la revendication 1 sont appliquées sur les champignons phytopathogènes indésirables et/ou sur leur habitat et/ou leur semence.

8. Processus de préparation de compositions fongicides, **caractérisé en ce que** des combinaisons d'un composé actif selon la revendication 1 sont mélangées avec des charges diluantes et/ou des tensioactifs.

9. Procédé selon la revendication 8, **caractérisé en ce qu'**une semence est incubée ou revêtue simultanément avec de la formononétine et un fongicide sélectionné parmi le métalaxyl, le tébuconazole, la trifoxystrobine et le penflufène.

10. Procédé selon la revendication 8, **caractérisé en ce qu'**une semence est incubée ou revêtue séparément avec de la formononétine et un fongicide sélectionné parmi le métalaxyl, le tébuconazole, la trifoxystrobine et le penflufène, éventuellement avec au moins une autre couche de séparation entre des couches d'ingrédient actif.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5002603 A
- WO 2008103422 A
- WO 2008086948 A
- WO 9107868 A
- WO 2005110088 A
- WO 2005058036 A
- EP 0382375 A
- DE 19602095 A
- DE 19646407 A
- EP 0712396 B
- EP 0460575 A
- EP 0569384 A
- EP 0596254 A
- DE 19539324 A
- WO 9823155 A
- EP 0253213 A
- EP 0398692 A
- EP 0278595 A
- DE 4423612 A
- DE 2551560 A
- EP 0112284 A
- EP 0258161 A
- DE 3406993 A
- DE 3042303 A
- DE 2735872 A
- EP 0145294 A
- EP 0234242 A
- EP 0015756 A
- EP 0196038 A
- EP 0068813 A
- EP 0537157 A
- WO 9616048 A
- DE 3721786 A
- EP 0040345 A
- EP 0329397 A
- EP 0378953 A
- DE 2324010 A
- DE 2201063 A
- EP 0183458 A
- EP 0256503 A
- DE 19531813 A
- EP 0315502 A
- EP 0737682 A
- EP 0639574 A
- EP 0339418 A
- EP 0341475 A
- EP 0600629 A
- WO 9942447 A
- EP 0604019 A
- WO 9924413 A
- US 3249499 A
- US 6616054 B
- WO 9618631 A
- WO 0238542 A
- WO 04016088 A
- WO 03010149 A
- JP 10251240 A
- DE 10303589 A
- DE 10229595 A
- DE 2903612 A
- DE 2513732 A
- DE 2515091 A
- WO 9601559 A
- US 4272417 A
- US 4245432 A
- US 4808430 A
- US 5876739 A
- US 20030176428 A1
- WO 2002080675 A1
- WO 2002028186 A2
- WO 9637494 A
- WO 9825923 A


### Non-patent literature cited in the description


- Calculating Synergistic and Antagonistic Responses of Herbicide Combinations. **COLBY, S.R.** Weeds. 1967, vol. 15, 20-22